# EUROPEAN PATENT APPLICATION

(11) **EP 4 841 569 A1**
(43) Date of publication of application: **18.11.2026**
(21) Application number: 25738927.0
(22) Date of filing: 10.01.2025
(51) Int. Cl.: G06T 7/80, G01B 11/00, G06T 7/66, G06T 7/70, H04N 23/60

(54) **CALIBRATION METHOD AND CALIBRATION DEVICE FOR CAMERA**

(30) Priority: 11.01.2024 JP 2024002638; 11.01.2024 JP 2024002639; 11.01.2024 JP 2024002640
(71) Applicant: Tokyo Seimitsu Co., Ltd., Hachioji-shi, Tokyo 192-8515 (JP)
(72) Inventor: HAYASHI, Kyohei, Tsuchiura-city, Ibaraki 3000006 (JP)
(74) Representative: Grünecker Patent- und Rechtsanwälte PartG mbB
(86) International application number: PCT/JP2025/000655
(87) International publication number: WO 2025/150560

(57) **Abstract**

A camera calibration method includes: an image acquisition step of acquiring a plurality of calibration images obtained by capturing, with a camera, a dot patten having a plurality of periodically arranged dots; a pattern information setting step of setting pattern information including information on arrangement of the dots; a feature point detecting step of detecting feature points indicating positions of the dots from each of the calibration images; and a parameter calculating step of calculating a parameter of the camera based on the feature points and the pattern information. The feature point detecting step includes detecting a dot center-of-gravity position as a feature point based on a projection image obtained by projecting a contour of each dot image DI on an image plane IP of the calibration image onto a virtual plane VP set in a three-dimensional space.

## Description

### BACKGROUND OF THE INVENTION

### Field of the Invention

The present invention relates to a camera calibration method and calibration apparatus.

### Description of the Related Art

In using a camera for object detection, calibration of the camera is generally performed. In camera calibration, a planar calibration pattern having a plurality of two-dimensionally aligned feature points is prepared, and the calibration pattern is captured from a plurality of directions with a camera. Feature points are detected from a plurality of images captured by the camera, and parameters of the camera are estimated using coordinates of the detected feature points. The parameters of the camera include intrinsic parameters (a focal length and an optical center) or distortion parameters (distortion coefficients) of the camera.

For example, Patent Literature 1 discloses a method that performs camera calibration using, as a calibration pattern, a dot pattern in which a plurality of dots (black circles) are aligned in a grid. The method obtains parameters of a camera by detecting, as a feature point, a position of a center of gravity (centroid) of each dot included in the dot pattern on an image (calibration image) captured with the camera.

Patent Literature 1 also discloses, as calibration patterns other than the dot pattern, a square grid pattern and a checkered pattern. In a case where these calibration patterns are used, an intersection between straight lines (a corner) is detected as a feature point.

### Citation List

### Patent Literature(s)

Patent Literature 1: Japanese Patent Application Laid-Open No. 2022-30807

### SUMMARY OF THE INVENTION

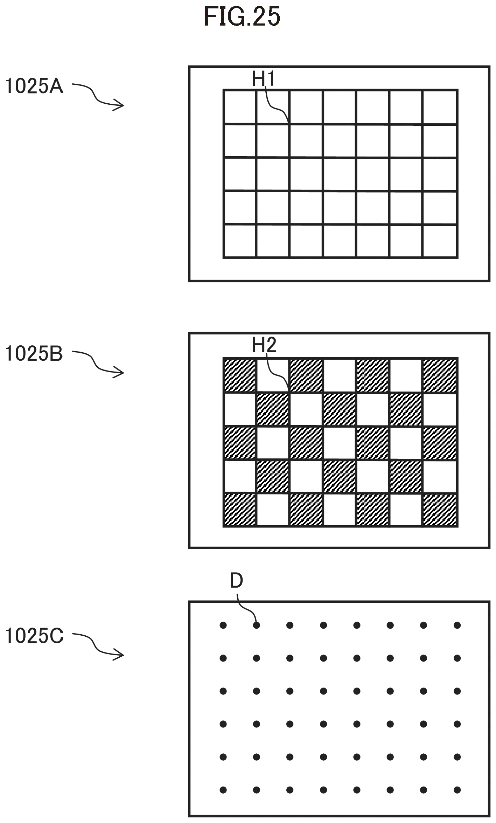

In a case where, for example, a square grid pattern indicated by reference character 1025A of Figure 25 or a checkered pattern indicated by reference character 1025B of Figure 25 of the calibration patterns disclosed in Patent Literature 1 is used, an intersection (corner) H1 or H2 between straight lines in the pattern is detected as a feature point (i.e., an edge is detected) on a calibration image. In this edge detection, a luminance gradient (derivative value) of an edge needs to be used. For this reason, a detected position (coordinates) of the intersection H1 or H2 is susceptible to luminance noise. The checkered pattern suffers accuracy of feature point detection lower than the case of a dot pattern.

In a case where a dot pattern indicated by reference character 1025C of Figure 25 is used, a center-of-gravity position of a dot D in the dot pattern is detected as a feature point on a calibration image. Although the dot pattern is less susceptible to luminance noise than the square grid pattern or the checkered pattern, the dot pattern suffers the problem below.

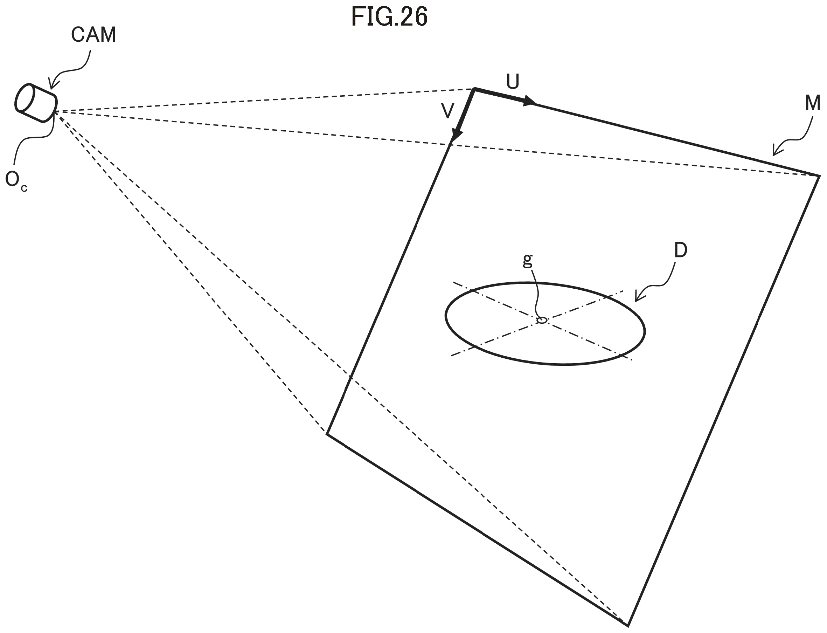

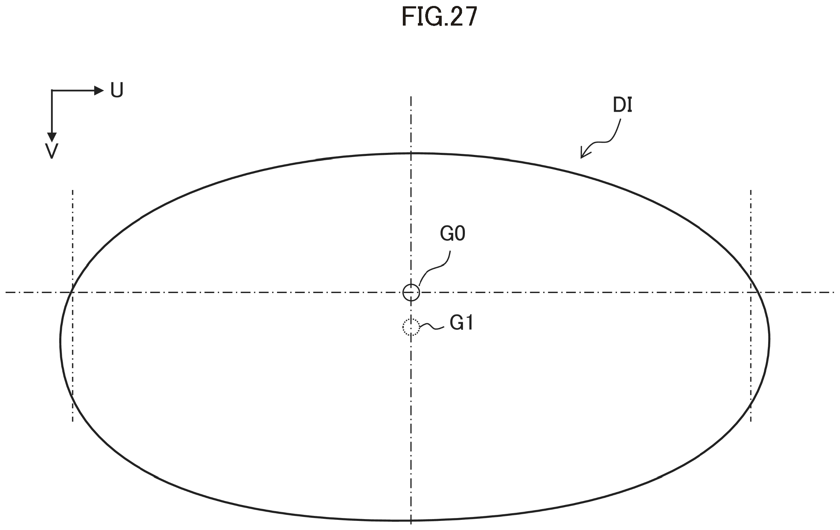

Figures 26 and 27 show an example in which the dot D on the dot pattern is captured with a camera CAM. In Figure 26, reference character O_{c} denotes an origin (camera origin) of a camera coordinate system based on the camera CAM. In Figures 26 and 27, a U axis and a V axis are coordinate axes forming an image coordinate system (two-dimensional orthogonal coordinate system) defined on an image plane M of the camera CAM.

An image captured using a camera having a normal lens (a non-telecentric optical system) has the property that a magnification changes depending on a distance from the camera. That is, the longer the distance from the camera is, the smaller an obtained image is, whereas the shorter the distance, the larger an obtained image. For this reason, in a case where the dot D on the dot pattern is captured from an oblique direction by the camera CAM, as shown in Figure 26, an image (hereinafter referred to as a "dot image") DI of the dot D on an image captured by the camera CAM has an oval shape distorted in a particular direction in accordance with a positional relationship with the camera CAM, as shown in Figure 27. That is, the dot image DI on the image captured by the camera CAM has a shape which is smaller on a near side (a side at a shorter distance from the camera CAM, +V side) than on a far side (a side at a longer distance from the camera CAM, -V side). Thus, an attempt to two-dimensionally obtain a dot center-of-gravity position from the shape of the dot image DI on the image (the image captured by the camera CAM) may result in obtainment of a position deviating from a proper position as the dot center-of-gravity position due to influence of the non-telecentric optical system.

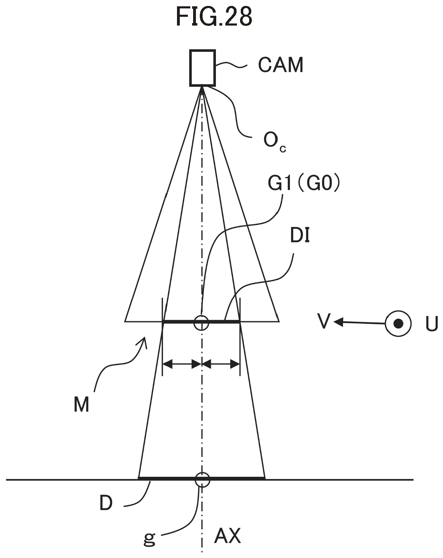

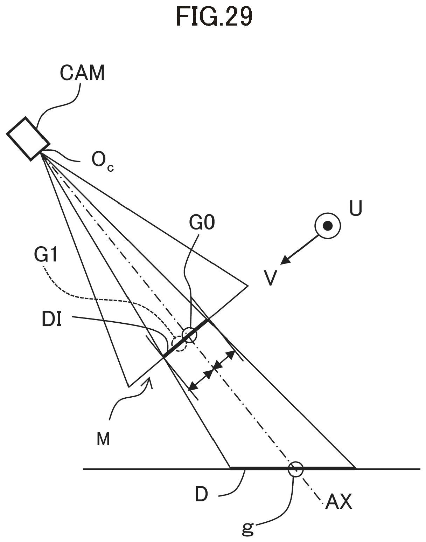

Figures 28 and 29 are views for explaining influence of camera tilt CAM with respect to the dot pattern (dot D) on a detection result of a dot center-of-gravity position.

Figure 28 shows a state where the camera CAM squarely faces the dot pattern (dot D) (a state where an optical axis AX of the camera CAM is orthogonal to the dot D, i.e., a state where the camera CAM is not inclined with respect to the dot pattern). In this case, a dot image DI on an image plane M of the camera CAM and the dot D to be projected have similar figures, and a dot center-of-gravity position G1 on the image plane M (a center-of-gravity position two-dimensionally obtained from the shape of the dot image DI on the image plane M) coincides with an actual dot center-of-gravity position G0 on the image plane M (a projected point obtained by projecting a center-of-gravity position g of the dot D to be projected onto the image plane M). A dot center-of-gravity position can be detected without errors.

Figure 29 shows a state where the camera CAM is inclined with respect to the dot pattern (dot D). In this case, in a dot image DI on an image plane M, one side (the left side in Figure 29) of an actual dot center-of-gravity position G0 on the image plane M (a projected point obtained by projecting the center-of-gravity position g of the dot D to be projected onto the image plane M) and the other side (the right side in Figure 29) are not in symmetry in shape due to influence of the non-telecentric optical system. For this reason, a dot center-of-gravity position G1 on the image plane M and the actual dot center-of-gravity position G0 on the image plane M do not coincide to cause a detection error of a dot center-of-gravity position.

Occurrence of such a detection error of a dot center-of-gravity position may cause a decrease in accuracy of camera calibration.

The present invention has been made in view of the above-described circumstances, and has as its object to provide a camera calibration method and calibration apparatus capable of enhancing the accuracy of camera calibration.

In order to achieve the object, the present invention includes the following aspects.

A camera calibration method according to a first aspect includes: an image acquisition step of acquiring a plurality of calibration images obtained by capturing, with a camera, a dot pattern having a plurality of periodically arranged dots; a pattern information setting step of setting pattern information including information on arrangement of the dots; a feature point detecting step of detecting feature points indicating positions of the dots from the calibration images; and parameter calculating step of calculating a parameter of the camera based on the feature points and the pattern information, wherein the feature point detecting step comprises detecting a position of a center of gravity of each dot as a feature point, based on a projection image obtained by projecting a contour of each dot from an image plane of the calibration image onto a virtual plane set in a three-dimensional space.

In a camera calibration method according to a second aspect, in the first aspect, the feature point detecting step includes: obtaining a virtual plane that is optimized such that a circle is fitted to the projection image; and detecting the position of the center of gravity of each dot as the feature point, based on the projection image on the obtained virtual plane.

In a camera calibration method according to a third aspect, in the first aspect, the feature point detecting step includes: when it is assumed that a circle obtained by performing an approximation process on a point cloud including a plurality of projected points obtained by projecting a plurality of contour points each indicating the contour of the dot from the image plane onto the virtual plane is an approximate circle, obtaining the virtual plane optimized such that an evaluation value indicating a fitting error of the approximate circle with respect to the point cloud is minimized or is less than or equal to a threshold; and setting, as the position of the center of gravity of each dot, a position of a point obtained by projecting a center of the approximate circle from the optimized virtual plane onto the image plane.

In a camera calibration method according to a fourth aspect, in the third aspect, the virtual plane comprises a plurality of virtual planes with different orientations in a three-dimensional space, and the feature point detecting step comprises a search step of searching for the optimized virtual plane among the plurality of virtual planes based on the evaluation value indicating the fitting error of the approximate circle with respect to the point cloud.

In a camera calibration method according to a fifth aspect, in the fourth aspect, the search step includes: calculating, while changing an orientation of the virtual plane to a plurality of orientations by rotating the virtual plane around an axis parallel to a long axis direction of the dot on the image plane, the evaluation value for each orientation; and determining the optimized virtual plane based on the evaluation value calculated for each orientation.

In a camera calibration method according to a sixth aspect, in the fourth or fifth aspect, the feature point detecting step includes: a contour point extracting step of extracting a plurality of contour points of one of the dots from the image plane; a half line group generating step of generating a group of half lines each originating from an optical center of the camera and passing through one of the plurality of contour points of the dot on the image plane; and an approximate circle calculating step of calculating the approximate circle based on a group of intersections between the group of half lines and the virtual plane.

A camera calibration apparatus according to a seventh aspect includes: an image acquisition unit configured to acquire a plurality of calibration images obtained by capturing, with a camera, a dot pattern having a plurality of periodically arranged dots; a pattern information setting unit configured to set pattern information including information on arrangement of the dots in the dot pattern; a feature point detection unit configured to detect feature points from the calibration images; and a parameter calculation unit configured to calculate a parameter of the camera based on the feature points and the pattern information. The feature point detection unit detects a position of a center of gravity of each dot as a feature point, based on a projection image obtained by projecting a contour of each dot from an image plane of the calibration image onto a virtual plane set in a three-dimensional space.

A camera calibration method according to an eighth aspect of the present invention includes: an image acquisition step of acquiring a plurality of calibration images obtained by capturing a calibration pattern including a reduced-size target in a defocused state; a pattern information setting step of setting pattern information on calibration; a feature point detecting step of detecting, as a feature point, a center-of-gravity position of a defocused image of the target from each of the calibration images; and a parameter calculating step of calculating a camera parameter based on the pattern information and a position of the feature point.

In a camera calibration method according to a ninth aspect of the present invention, in the eighth aspect, a size of the reduced-size target is determined in accordance with at least one of a focal length of a camera that captures the target, a distance between the camera and the reduced-size target, or a pixel size of an image sensor of the camera.

In a camera calibration method according to a tenth aspect of the present invention, in the eighth aspect, the size of the reduced-size target is determined such that a size of an image of the reduced-size target on an image sensor of the camera when the reduced-size target is captured in an in-focus state is equal to or less than one pixel. Note that the size of the reduced-size target may be determined such that a size of the image of the reduced-size target on the image sensor of the camera when the reduced-size target is captured in the in-focus state exceeds one pixel depending on a tolerance (allowable error).

In a camera calibration method according to an eleventh aspect of the present invention, in any one of the eighth to tenth aspects, the pattern information includes information on arrangement of the target in the calibration pattern.

In a camera calibration method according to a twelfth aspect of the present invention, in any one of the eighth to eleventh aspects, the target has a shape symmetric with respect to two directions orthogonal to each other or a point-symmetric shape.

In a camera calibration method according to a thirteenth aspect of the present invention, in the twelfth aspect, the target has a dot shape.

In a camera calibration method according to a fourteenth aspect of the present invention, in the twelfth aspect, the target is a point light source.

A camera calibration method according to a fifteenth aspect of the present invention includes: an image acquisition step of capturing, with a camera arranged at a position optically conjugate to a light source, a reflected light of illumination light emitted from the light source to a calibration target including a reflector having a reflective characteristics to reflect the illumination light back in an incident direction to acquire a calibration image; a pattern information setting step of setting pattern information on the calibration target; a feature point detecting step of detecting, as a feature point, a focal position of the reflected light from the calibration image; and a parameter calculating step of calculating a camera parameter based on the pattern information and a position of the feature point.

In a camera calibration method according to a sixteenth aspect of the present invention, in the fifteenth aspect, the image acquisition step includes capturing reflected lights from at least two reflectors of the calibration target with the camera.

In a camera calibration method according to a seventeenth aspect of the present invention, in the fifteenth or sixteenth aspect, the pattern information includes information on arrangement of the reflector and an interval for the reflector.

In a camera calibration method according to an eighteenth aspect of the present invention, in any one of the fifteenth to seventeenth aspects, the reflector includes a plurality of reflectors, each of the reflectors has a spherical shape and are arranged in an array on the calibration target.

In a camera calibration method according to a nineteenth aspect of the present invention, in the eighteenth aspect, a surface of each reflector is a mirrored surface or a rough surface from which a specularly reflected light distinguishable from a diffusely reflected light produced by illumination light incident on the surface of the reflector at a non-normal angle is obtained.

In a camera calibration method according to a twelfth aspect of the present invention, in the eighteenth aspect, the reflector is made of glass or sapphire.

According to the present invention, it is possible to improve accuracy of camera calibration.

### BRIEF DESCRIPTION OF THE DRAWINGS

Figure 1 is an explanatory drawing for explaining a projection model of a camera;
Figure 2 is a block diagram showing an example of a schematic configuration of a calibration apparatus;
Figure 3 is a flowchart showing overall processing of a calibration process to be executed by the calibration apparatus according to a first embodiment;
Figure 4 is a view showing an example of a calibration pattern (dot pattern) used in the first embodiment;
Figure 5 is an explanatory drawing for explaining a detection principle of a feature point detection process;
Figure 6 is a flowchart showing an example of a procedure for the feature point detection process;
Figure 7 is a flowchart showing the example of the procedure for the feature point detection process;
Figure 8 is a graph for explaining effects of the first embodiment;
Figure 9 is a drawing showing an example in which targets are captured with a camera;
Figure 10 is a plan view showing an example of a calibration pattern;
Figure 11 shows images (according to a working example and a comparative example) obtained by capturing a target;
Figure 12 is a flowchart showing overall processing of a calibration process to be executed by a calibration apparatus according to a second embodiment;
Figure 13 is a graph showing tilt robustness of calibration methods;
Figure 14 is a graph showing a luminance-noise robustness of a calibration method (according to a working example);
Figure 15 is a graph showing a luminance-noise robustness of a calibration method (according to a first comparative example);
Figure 16 is a graph showing a luminance-noise robustness of a calibration method (according to a second comparative example);
Figure 17 is a perspective view showing a calibration target;
Figure 18 is a sectional view taken along line AA-AA in Figure 17;
Figure 19 is a diagram for explaining an example of calibration using the calibration target;
Figure 20 is a flowchart showing overall processing of a calibration process to be executed by a calibration apparatus according to a third embodiment;
Figure 21 is a graph showing tilt robustness of calibration methods;
Figure 22 is a graph showing a luminance-noise robustness of a calibration method (according to a working example);
Figure 23 is a graph showing a luminance-noise robustness of a calibration method (according to a first comparative example);
Figure 24 is a graph showing a luminance-noise robustness of a calibration method (according to a second comparative example);
Figure 25 is a view showing examples of a calibration pattern;
Figure 26 is a view showing an example in which a dot is captured by a camera;
Figure 27 is a view showing the example in which the dot is captured by the camera;
Figure 28 is a drawing for explaining influence of camera tilt with respect to a dot pattern on a detection result; and
Figure 29 is view for explaining the influence of the camera tilt with respect to the dot pattern on the detection result.

### DESCRIPTION OF THE EMBODIMENTS

Embodiments of the present invention will be described below with reference to the accompanying drawings.

### [Projection Model of Camera]

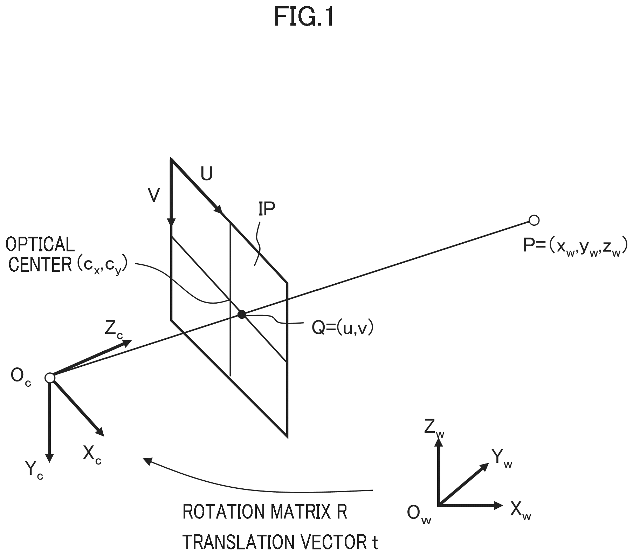

A projection model of a camera will be described first. Figure 1 is an explanatory drawing for explaining a camera projection model. Note that the camera projection model shown in Figure 1 is shared by the embodiments below.

As shown in Figure 1, a world coordinate system is a coordinate system representing a position in a three-dimensional space (real space) and is a three-dimensional orthogonal coordinate system having an origin O_{w}, and an X_{w} axis, a Y_{w} axis, and a Z_{w} axis orthogonal to one another as coordinate axes. Note that any coordinate system may be used as the world coordinate system as long as a position in the three-dimensional space (three-dimensional position) can be identified. A camera coordinate system is a three-dimensional orthogonal coordinate system having an optical axis center O_{c} of a camera as an origin, and an axis extending rightward from the origin O_{c} as an X_{c} axis, an axis extending downward as a Y_{c} axis, and an axis extending in an optical axis direction as a Z_{c} axis. An image coordinate system is a two-dimensional orthogonal coordinate system (pixel coordinate system) having, as an origin, the upper left corner of an image plane IP away from the origin O_{c} of the camera coordinate system in a direction of the Z_{c} by a focal length f, and a U axis and a V axis extending in directions parallel to the X_{c} axis and the Y_{c} axis, respectively.

First, coordinates (x_{w}, y_{w}, z_{w}) in the world coordinate system of a point P (object point) in the three-dimensional space can be converted into coordinates (x ,y, z) in the camera coordinate system using a rotation matrix R and a translation vector t of the camera, as indicated by Expression (1) below.
[Math. 1] $\left[\begin{matrix}x \\ y \\ z \\ 1\end{matrix}\right] = \left[\begin{matrix}{r}_{11} & {r}_{12} & {r}_{13} & {t}_{x} \\ {r}_{21} & {r}_{22} & {r}_{23} & {t}_{y} \\ {r}_{31} & {r}_{32} & {r}_{33} & {t}_{z} \\ 0 & 0 & 0 & 1\end{matrix}\right] \left[\begin{matrix}{x}_{w} \\ {y}_{w} \\ {z}_{w} \\ 1\end{matrix}\right] = \left[R\left|t\right.\right] \left[\begin{matrix}{x}_{w} \\ {y}_{w} \\ {z}_{w} \\ 1\end{matrix}\right]$ (1)

In Expression (1), [R|t] is a matrix (external parameter matrix) that converts from the world coordinate system into the camera coordinate system, and is a representation of an orientation and a position of the camera in the world coordinate system. Elements r₁₁, r₁₂,..., r₃₃, tₓ, t_{y}, and t_{z} of [R|t] are external parameters of the camera.

Assuming that coordinates (pixel coordinates) of a projected point Q obtained when the point P at (x ,y, z) as viewed from the camera coordinate system is projected onto the image plane IP are (u, v), relational expressions indicated by Expressions (2) to (7) below hold.
[Math. 2] $x ′ = \frac{x}{z} , y ′ = \frac{y}{z}$ (2)
[Math. 3] $x " = x ′ \left(1+{k}_{1}{r}^{2}+{k}_{2}{r}^{4}+{k}_{3}{r}^{6}\right) + 2 {p}_{1} x ′ y ′ + {p}_{2} \left({r}^{2}+2x{′}^{2}\right)$ (3)
[Math. 4] $y " = y ′ \left(1+{k}_{1}{r}^{2}+{k}_{2}{r}^{4}+{k}_{3}{r}^{6}\right) + {p}_{1} \left({r}^{2}+2y{′}^{2}\right) + 2 {p}_{2} x ′ y ′$ (4)
[Math. 5] ${r}^{2} = x {′}^{2} + y {′}^{2}$ (5)
[Math. 6] $u = {f}_{x} x " + {c}_{x}$ (6)
[Math. 7] $v = {f}_{y} y " + {c}_{y}$ (7)

In the above expressions, (x', y') represents coordinates of a projected point obtained when the point P at (x, y, z) as viewed from the camera coordinate system is projected onto a normalized image plane (z = 1), and (x", y") represents coordinates of a projected point (distorted point) obtained when the point P is projected onto the normalized image plane in view of a lens distortion of the camera.

Reference characters fₓ and f_{y} indicate focal lengths in an x direction and a y direction expressed in pixels. Reference characters cₓ and c_{y} indicate an optical center (a position where an optical axis of the camera intersects the image plane IP, an optical center in pixels) in the image coordinate system. Reference characters k₁, k₂, and k₃ are radial distortion coefficients, and reference characters p₁ and p₂ are tangential distortion coefficients. In the present specification, the focal lengths fₓ and f_{y} and the optical center (cₓ, c_{y}) are intrinsic parameters of the camera, and the distortion coefficients k₁, k₂, k₃, p₁, and p₂ are distortion parameters of the camera.

### <First Embodiment>

### [Calibration Apparatus]

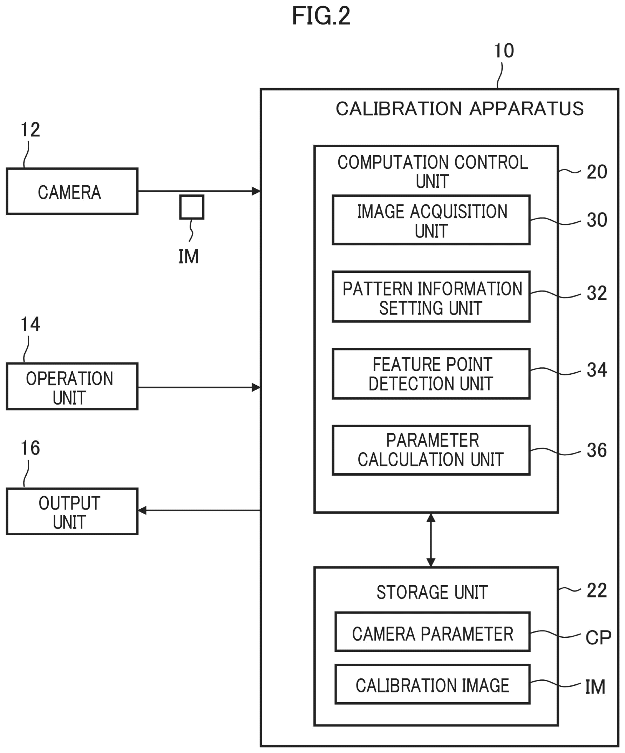

Figure 2 is a block diagram showing an example of a schematic configuration of a calibration apparatus 10 according to a first embodiment. As shown in Figure 2, the calibration apparatus 10 includes a computation control unit 20 and a storage unit 22. A camera 12, an operation unit 14, and an output unit 16 are connected to the calibration apparatus 10.

The camera 12 generates images IM (calibration images) obtained by capturing a calibration pattern in directions different from each other and outputs the images IM to the calibration apparatus 10. The camera 12 has a non-telecentric optical system (an optical system having non-telecentricity on the subject side), and capturing is performed via a lens group as the non-telecentric optical system by an image sensor.

The operation unit 14 is configured to include an operation member, such as a keyboard or a mouse, and accepts input of various operations from an operator.

The output unit 16 is a device for outputting a result of computation by the computation control unit 20, and the like. The output unit 16 includes a monitor (e.g., a liquid crystal display) for displaying an operation user interface (UI) and a computation result. The output unit 16 may include a printer, a speaker, or the like in addition to or instead of the monitor.

The computation control unit 20 controls operation of the calibration apparatus 10. The computation control unit 20 is, for example, composed of a computation device, such as a personal computer, and includes an arithmetic circuit composed of various processors, memories, and the like. The various processors include a central processing unit (CPU), a graphics processing unit (GPU), an application specific integrated circuit (ASIC), programmable logic devices (e.g., simple programmable logic devices (SPLD), a complex programmable logic device (CPLD), and field programmable gate arrays (FPGA)), and the like. Note that various functions of the calibration apparatus 10 may be implemented by one processor or may be implemented by a plurality of processors of the same type or of different types.

The storage unit 22 stores a control program and various data. The storage unit 22 is composed of, for example, a hard disk drive (HDD) or a semiconductor memory device (solid state drive (SSD)). The storage unit 22 may include a temporary storage element composed of a random access memory (RAM), such as a dynamic random access memory (DRAM) or a static random access memory (SRAM) and function as a work area for the computation control unit 20.

A plurality of calibration images IM captured by the camera 12 are temporarily stored in the storage unit 22. Camera parameters CP obtained by the computation control unit 20 are also stored in the storage unit 22. The camera parameters CP include the intrinsic parameters (the focal lengths and the optical center) and the distortion parameters (radial distortion coefficients and tangential distortion coefficients) of the camera 12.

The computation control unit 20 functions as an image acquisition unit 30, a pattern information setting unit 32, a feature point detection unit 34, and a parameter calculation unit 36 by reading and executing the control program stored in the storage unit 22. Functions of the units constituting the computation control unit 20 will be described later.

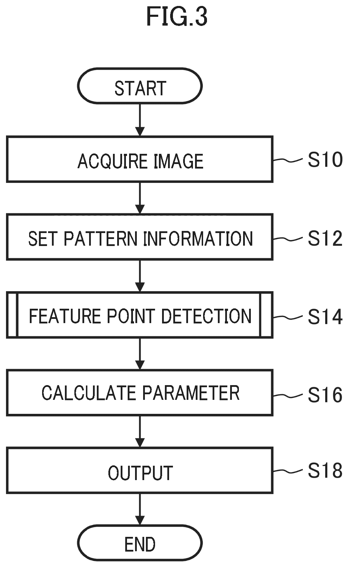

A processing procedure (an example of a calibration method) for a calibration process to be executed by the calibration apparatus 10 according to the first embodiment will be described below. Figure 3 is a flowchart showing overall processing of the calibration process to be executed by the calibration apparatus 10 according to the first embodiment. Note that various initialization processes, such as operation check of the units in the calibration apparatus 10, are assumed to have been performed at the start of the flowchart shown in Figure 3.

### (Step S10: Image acquisition step)

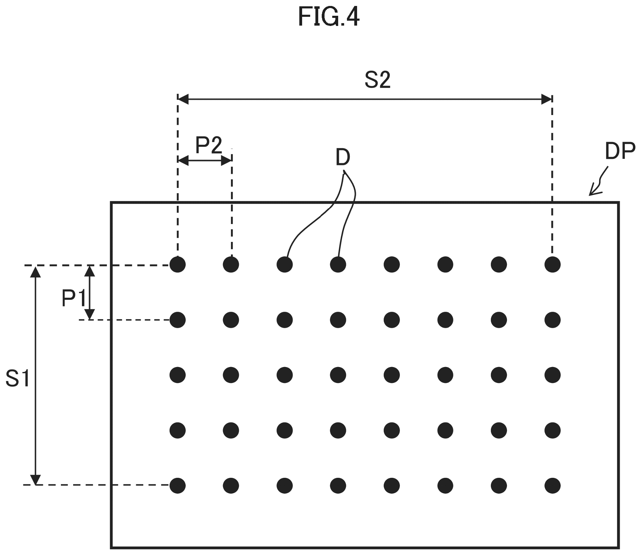

First, the image acquisition unit30 acquires a plurality of calibration images IM captured with the camera 12, and stores the plurality of calibration images IM in the storage unit 22. In the present embodiment, a dot pattern DP (also referred to as a "circle grid") in which a plurality of dots D (black circles) are arrayed in a matrix is used as a calibration pattern. An example of the dot pattern DP is shown in Figure 4. Note that shapes or arrangement of the dots D in the dot pattern DP are not limited to the example shown in Figure 4 as long as feature points are distributed in a such shape or arrangement that the feature points can be easily detected by an existing search method.

The plurality of calibration images IM are obtained by capturing, with the camera 12, the dot pattern DP as the calibration pattern from directions different from each other. The number of calibration images IM is at least two or more, preferably five or more, more preferably ten or more. Note that the capture of the calibration pattern (dot pattern DP) by the camera 12 may be performed before the image acquisition step.

The image acquisition unit 30 may acquire the calibration images IM from the camera 12 through a cable or a recording medium. Alternatively, the calibration images IM may be stored in an external storage device, such as an external server installed outside the calibration apparatus 10, and the image acquisition unit 30 may acquire the calibration images IM from the external storage device via a wired or wireless network.

### (Step S12: Pattern Information Setting Step)

The pattern information setting unit 32 sets pattern information including information on the arrangement of the dots D in the dot pattern DP. For example, the pattern information includes the numbers of dots in a vertical direction (column direction) and a horizontal direction (row direction) in the dot pattern DP. In the example shown in Figure 4, the number of dots in the vertical direction in the dot pattern DP is five, and the number of dots in the horizontal direction is eight. The pattern information includes overall lengths S1 and S2 in the vertical direction and the horizontal direction of the dot pattern DP in addition to the numbers of dots in the vertical direction and the horizontal direction of the dot pattern DP. Note that the pattern information may include pitches P1 and P2 in the vertical direction and the horizontal direction of the dot pattern DP instead of the overall lengths S1 and S2 in the vertical direction and the horizontal direction of the dot pattern DP. With this pattern information, a relative positional relationship among the dots D on the dot pattern DP can be identified. Note that the pattern information is information used by the feature point detection unit 34 (to be described later) to identify a point (object point) in a three-dimensional space corresponding to a feature point (image point) in an image coordinate system.

The pattern information setting unit 32 may acquire, for example, pattern information input by the operator via the operation unit 14. Alternatively, pattern information may be stored in advance in the storage unit 22, and the pattern information setting unit 32 may acquire the pattern information from the storage unit 22. Note that the pattern information setting step only needs to be performed at least before a parameter calculating step (to be described later). For example, the pattern information setting step may be performed before the image acquisition step or after the feature point detecting step.

### (Step S14: Feature Point Detecting Step)

The feature point detection unit 34 executes a feature point detection process of detecting a plurality of feature points for each of the plurality of calibration images IM captured by the camera 12. Specifically, the feature point detection unit 34 sequentially reads the plurality of calibration images IM stored in the storage unit 22. The feature point detection unit 34 performs the processing below for each of the read calibration images IM. After the feature point detection unit 34 subjects each calibration image IM to predetermined image processing (e.g., grayscale transform), the feature point detection unit 34 detects feature points (image points) from the calibration image IM and obtains coordinates (pixel coordinates) of each feature point in the image coordinate system. In the present embodiment, a position of a center of gravity of each dot D (dot image DI) (dot center-of-gravity position) is detected as a feature point on each calibration image IM. Coordinates of a feature point detected by the feature point detection unit 34 are temporarily stored in the storage unit 22. Note that details of the feature point detection process to be executed by the feature point detection unit 34 will be described later.

In a case where there is any calibration image IM, from which no feature point is successfully detected, among the plurality of calibration images IM, the feature point detection unit 34 performs an exclusion process of excluding the calibration image IM, from which no feature point is successfully detected, from a parameter calculating process (to be described later). For this reason, the parameter calculating process can calculate the camera parameters CP based on calibration images IM left after the exclusion process (i.e., calibration images IM, from which feature points are successfully detected) of the plurality of calibration images IM.

### (Step S16: Parameter Calculating Step)

The parameter calculation unit 36 executes a process of calculating the camera parameters CP. Specifically, the parameter calculation unit 36 calculates the camera parameters CP based on positions of the feature points (dot center-of-gravity positions) on the calibration images IM detected by the feature point detection unit 34 and the pattern information set by the pattern information setting unit 32. The camera parameters CP can be calculated using a publicly known method (e.g., Zhang's method). Zhang's method is a method that optimizes parameters such that a position of a feature point (image point) on a captured image (calibration image IM) and a position of a point (object point, known) on a three-dimensional space corresponding to the feature point have a correct correspondence relationship (Z. Zhang, "A flexible new technique for camera calibration", IEEE Transactions on Pattern Analysis and Machine Intelligence, Vol. 22, No. 11, pp. 1330-1334, 2000.).

The camera parameters CP calculated by the parameter calculation unit 36 are the intrinsic parameters (focal lengths fₓ and f_{y} and an optical center (cₓ, c_{y})) and the distortion parameters (distortion coefficients k₁, k₂, k₃, p₁, and p₂) of the camera 12. The parameter calculation unit 36 stores the calculated camera parameters CP in the storage unit 22.

### (Step S18: Outputting Step)

The parameter calculation unit 36 outputs a result of calculating the camera parameters CP to the output unit 16. This allows the operator to acquire the camera parameters CP. The operator can perform image correction and the like on an image captured with the camera 12 based on the camera parameters CP.

After the above-described processes, the flowchart of the overall processing of the calibration process to be executed by the calibration apparatus 10 ends.

### [Feature Point Detection process]

Details of the feature point detection process to be executed in the feature point detecting step will be described. The feature point detection process according to the first embodiment is a process of detecting a dot center-of-gravity position as a feature point on a calibration image IM. Note that the feature point detection process is assumed to be sequentially performed for each calibration image IM.

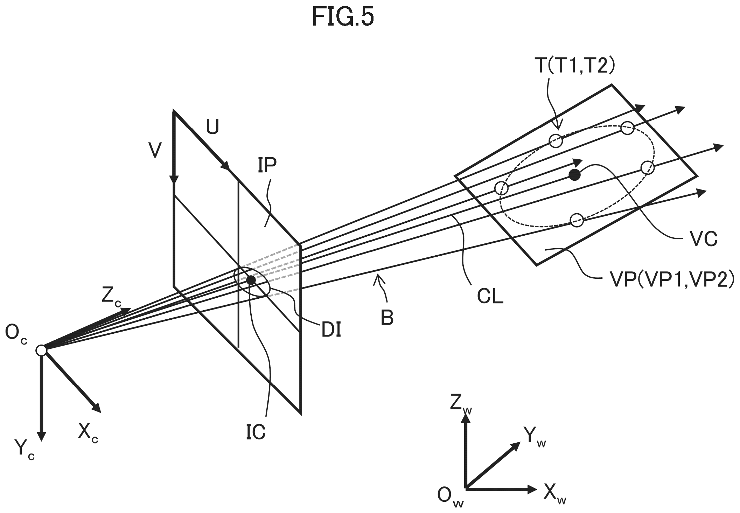

A detection principle of the feature point detection process will be described first with reference to Figure 5. Figure 5 is an explanatory drawing for explaining the detection principle of the feature point detection process.

When capturing is performed in a state where the dot pattern DP is inclined with respect to the camera 12, a dot D on the dot pattern DP is projected in a distorted manner onto an image plane IP of the camera 12 due to influence of the non-telecentric optical system. Thus, an attempt to two-dimensionally and directly detect a dot center-of-gravity position in a dot image DI in a calibration image IM may result in deviation of a detected dot center-of-gravity position from a proper position.

For this reason, in the first embodiment, the feature point detection process is three-dimensionally performed using a virtual plane VP as described below. That is, assuming that a virtual plane VP is a virtual plane set in a three-dimensional space, as shown in Figure 5, the feature point detection process obtains a virtual plane VP that is optimized by a fitting method, such as a least-square method, such that a projection image obtained by projecting a contour of a dot image DI on an image plane IP of a calibration image IM onto the virtual plane VP approaches a circle.

Specifically, the feature point detection process generates a group (half line group) B of half lines composed of a plurality of half lines originating from an origin O_{c} of a camera coordinate system (an optical center of the camera 12) and passing through a plurality of contour points of the dot image DI on the image plane IP and obtains a group (intersection group) T of intersections between the group B of half lines and a virtual plane VP. The feature point detection process obtains a virtual plane VP that is optimized so as to have a small evaluation value indicating a fitting error of an approximate circle, which is a circle obtained through approximation processing on the group T of intersections using the least-square method, with respect to the group T of intersections.

The evaluation value indicating the fitting error of an approximate circle to the group T of intersections on a virtual plane VP decreases, as the virtual plane VP comes closer to being parallel to the dot pattern DP (not shown in Figure 5) in the three-dimensional space. Thus, a virtual plane VP optimized so as to have a small evaluation value indicating the fitting error of the approximate circle to the group T of intersections on the virtual plane VP can be regarded as having an orientation substantially parallel to the dot pattern DP in the three-dimensional space. Note that the term "substantially parallel" as used herein is intended to include not only the meaning of "strictly parallel" but also the meaning of "generally parallel".

In a case where a center VC of the approximate circle on the virtual plane VP optimized in the above-described manner is projected onto the image plane IP, a position of a projected point IC on the image plane IP indicates a dot center-of-gravity position having a minimum projection distortion error on the image plane IP.

In the first embodiment, the virtual plane VP as described above optimized to have a small evaluation value indicating the fitting error is searched for among a plurality of virtual planes VP with different orientations in the three-dimensional space. The position of the projected point IC obtained by projecting the center VC of the approximate circle on the optimized virtual plane VP onto the image plane IP is set as a dot center-of-gravity position. As described above, since the optimized virtual plane VP can be regarded as being substantially parallel to the dot pattern DP in the three-dimensional space, setting the projected point IC obtained by projecting the center VC of the approximate circle on the optimized virtual plane VP onto the image plane IP as the dot center-of-gravity position enables coordinates (pixel coordinates) of the dot center-of-gravity position with a minimized projection distortion error to be obtained.

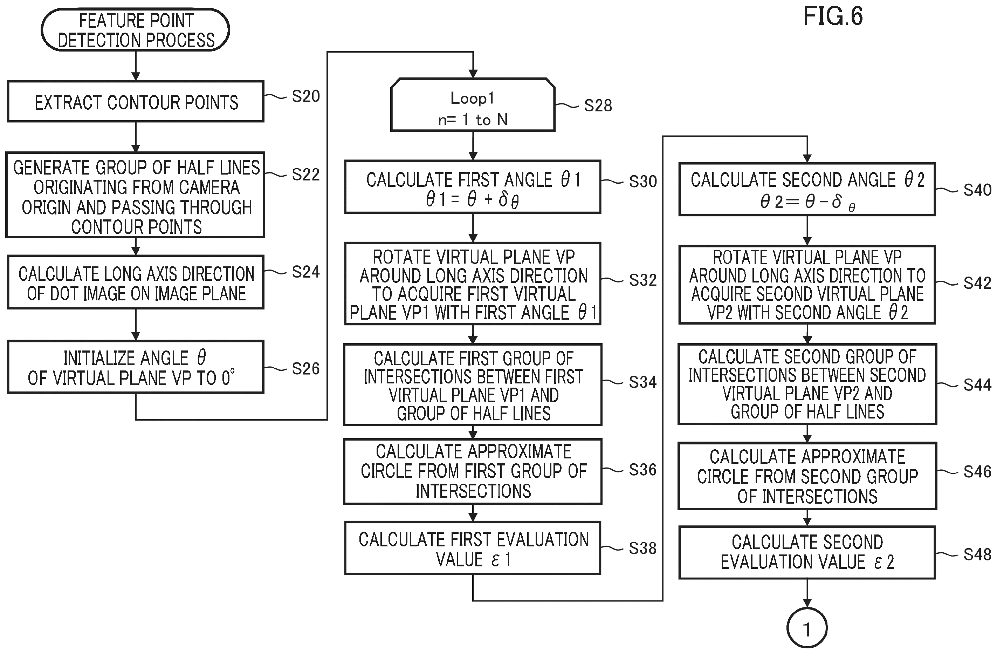

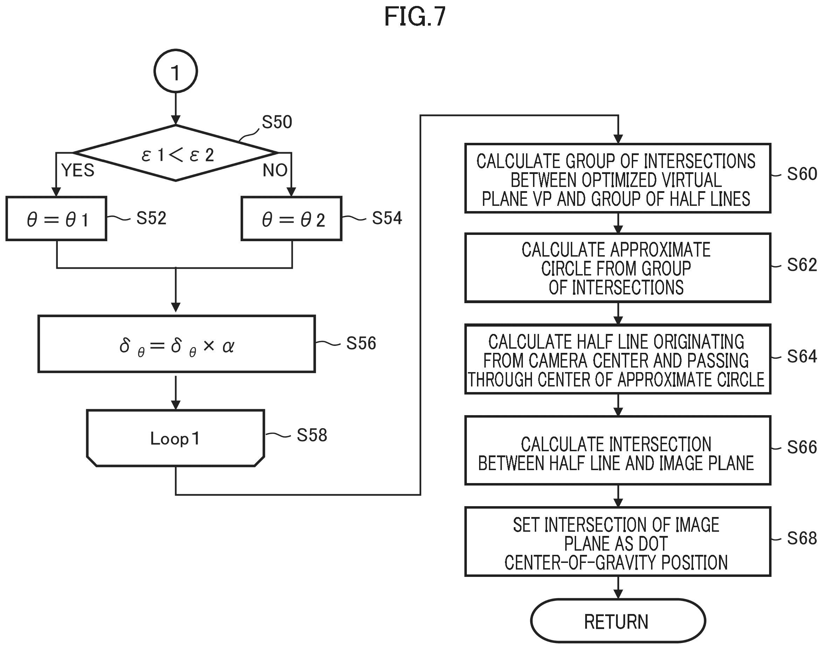

Figures 6 and 7 are flowcharts showing an example of a procedure for the feature point detection process. The example of the procedure for the feature point detection process will be described below with reference to the flowcharts shown in Figures 6 and 7.

### (Step S20: Contour Point Extracting Step)

First, the feature point detection unit 34 reads a calibration image IM and subjects the calibration image IM to predetermined image processing (e.g., grayscale transform), and then extracts a plurality of contour points indicating a contour of a dot image DI on an image plane IP of the calibration image IM. The number of contour points to be extracted at this time is at least three or more. A publicly known method, such as edge detection or binarization processing, is used to extract the contour (the plurality of contour points) of the dot image DI. With this extraction, coordinates of the plurality of contour points (contour pixels) indicating the contour of the dot image DI on the image plane IP are obtained.

### (Step S22: Half Line Group Generating Step)

The feature point detection unit 34 generates a group B of half lines composed of a plurality of half lines originating from the origin O_{c} of the camera coordinate system and passing through the contour points obtained in the contour point extracting step, as shown in Figure 5.

### (Step S24: Dot Long Axis Direction Calculating Step)

The feature point detection unit 34 calculates a long axis direction (hereinafter referred to as a "dot long axis direction") of the dot image DI on the image plane IP.

### (Step S26: Angle Initializing Step)

The feature point detection unit 34 initializes an angle θ of the virtual plane VP to 0°. The angle θ of the virtual plane VP is an angle indicating a rotational position in a case where the virtual plane VP is rotated around an axis parallel to the dot long axis direction in a loop process (to be described later). The present embodiment assumes that, in a case where the virtual plane VP is at an initial rotational position (θ = 0°), the virtual plane VP is arranged at a position where the virtual plane VP is parallel to the image plane IP in the three-dimensional space. The present invention, however, is not limited to this, and the virtual plane VP may be arranged at an arbitrary position.

### (Step S28: Loop Starting Step)

A loop starting step is a starting point of a loop process (Loop1) that repeats processes of steps S30 to S56, to be described later, N times. Note that the loop process is an example of a search step according to the present invention.

### (Step S30: Plus-side Rotation Angle Calculating Step)

The feature point detection unit 34 obtains, as a first angle θ1, a value obtained by adding a step angle δ*_{θ}* set in advance to the angle θ of the virtual plane VP, as indicated by Expression (8) below (δ*_{θ}* > 0, which applies hereinafter).
[Math. 8] $θ 1 = θ + {δ}_{θ}$ (8)

### (Step S32: Virtual Plane Rotating Step)

The feature point detection unit 34 performs a process of rotating the virtual plane VP around the axis parallel to the dot long axis direction such that the virtual plane VP has the first angle θ1. The virtual plane VP having the first angle θ1 will be referred to as a "first virtual plane VP1" hereinafter.

### (Step S34: Intersection Group Calculating Step)

The feature point detection unit 34 calculates a first group T1 of intersections between the group B of half lines and the first virtual plane VP1.

### (Step S36: Circle Approximation Step)

The feature point detection unit 34 performs circle approximation processing on the first group T1 of intersections using, e.g., the least-square method to calculate a position and a shape (a center position and a radius) of an approximate circle on the first virtual plane VP1.

### (Step S38: First Evaluation Value Calculating Step)

The feature point detection unit 34 calculates, as a first evaluation value ε1, an evaluation value indicating a fitting error of the approximate circle with respect to the first group T1 of intersections on the first virtual plane VP1. For example, the residual sum of squares or the sum of absolute residuals is used as an evaluation value calculated as the first evaluation value ε1. The residual sum of squares is the sum of squares of residuals that are differences between a center position of the approximate circle and points in the first group T1 of intersections, and the sum of absolute residuals is the sum of absolute values of the residuals.

### (Step S40: Minus-side Angle Calculating Step)

The feature point detection unit 34 obtains, as a second angle θ2, a value obtained by subtracting the step angle δ*_{θ}* set in advance from the angle θ of the virtual plane VP, as indicated by Expression (9) below.
[Math. 9] $θ 2 = θ - {δ}_{θ}$ (9)

### (Step S42: Virtual Plane Rotating Step)

The feature point detection unit 34 performs a process of rotating the virtual plane VP around the axis parallel to the dot long axis direction such that the virtual plane VP has the second angle θ2. The virtual plane VP having the second angle θ2 will be referred to as a "second virtual plane VP2" hereinafter.

### (Step S44: Intersection Group Calculating Step)

The feature point detection unit 34 calculates a second group T2 of intersections between the group B of half lines and the second virtual plane VP2.

### (Step S46: Circle Approximation Step)

The feature point detection unit 34 performs the circle approximation processing on the second group T2 of intersections using, e.g., the least-square method to calculate a position and a shape (a center position and a radius) of an approximate circle on the second virtual plane VP2.

### (Step S48: Second Evaluation Value Calculating Step)

The feature point detection unit 34 calculates, as a second evaluation value ε2, an evaluation value indicating a fitting error of the approximate circle with respect to the second group T2 of intersections on the second virtual plane VP2. The residual sum of squares or the sum of absolute residuals is used as an evaluation value calculated as the second evaluation value ε2, as with the first evaluation value ε1 described above.

### (Step S50: Evaluation Value Comparing Step)

The feature point detection unit 34 compares magnitudes of the first evaluation value ε1 and the second evaluation value ε2. In a case where the first evaluation value ε1 is smaller than the second evaluation value ε2 (YES), the flow advances to step S52. On the other hand, in a case where the first evaluation value ε1 is equal to or more than the second evaluation value ε2 (NO), the flow advances to step S54. Note that, in a case where the first evaluation value ε1 and the second evaluation value ε2 are equal, the flow may advance to step S52 instead of step S54.

### (Steps S52 and S54: Angle Updating Step)

The feature point detection unit 34 updates the angle θ of the virtual plane VP to the first angle θ1 (step S52) in a case where the first evaluation value ε1 is smaller than the second evaluation value ε2 and updates the angle θ of the virtual plane VP to the second angle θ2 (step S54) in a case where the first evaluation value ε1 is equal to or more than the second evaluation value ε2.

### (Step S56: Step Angle Updating Step)

The feature point detection unit 34 updates the step angle δ*_{θ}* to δ*_{θ}*×α. Note that the coefficient α is a real number satisfying 0 < α ≤ 1. For example, the coefficient α is empirically set based on, e.g., required calculation accuracy. Since the step angle δ*_{θ}* decreases gradually (stepwise) with increase in the number of repetitions of the loop process in a case where the coefficient α is set less than 1, it is possible to accurately obtain a virtual plane VP that is optimized so as to have a small evaluation value indicating a fitting error of the circle to a group T of intersections. The step angle updating step may be performed only in a case where a smaller one of the first evaluation value ε1 and the second evaluation value ε2 is smaller than a threshold set in advance (an evaluation value threshold). In this case, refined calculation can be performed by gradually decreasing the step angle δ*_{θ}* with decrease in evaluation value, and a processing speed of the feature point detection process can be increased.

### (Step S58: Loop Ending Step)

A loop ending step is an ending point of the above-described loop process (Loop1). In the present embodiment, the loop process ends when the processes in step S30 to step S56 are repeatedly performed N times. Note that the loop process may end in a case where either one of the condition that the number of repetitions of the loop process reach the upper limit N (N is an integer equal to or more than 2) (a first end condition) and the condition that the updated step angle δ*_{θ}* become smaller than a threshold set in advance (angle threshold) (a second end condition) is satisfied as an end condition for the loop process. Alternatively, the loop process may be ended in a case where the condition that a smaller one of the first evaluation value ε1 and the second evaluation value ε2 become smaller than a threshold (evaluation value threshold) (a third end condition) is satisfied.

With the above-described loop process, it is possible to search, from among a plurality of virtual planes VP having orientations different from each other in the three-dimensional space, for a virtual plane VP optimized so as to have an angle θ at which an evaluation value indicating a fitting error of an approximate circle to the group T of intersections on the virtual plane VP is minimized or is equal to or less than a threshold.

### (Step S60: Intersection Group Calculating Step)

The feature point detection unit 34 calculates the group T of intersections between the virtual plane VP optimized to have the angle θ by the loop process and the group B of half lines .

### (Step S62: Circle Approximation Processing Step)

The feature point detection unit 34 performs the circle approximation processing on the group T of intersections obtained in the intersection group calculating step (step S60) using, e.g., the least-square method to calculate a position and a shape (a center position and a radius) of an approximate circle on the virtual plane VP.

### (Step S64: Half Line Group Generating Step)

The feature point detection unit 34 generates a half line CL originating from the origin O_{c} of the camera coordinate system and passing through a center VC of the approximate circle obtained in the circle approximation processing step (step S62).

### (Step S66: Image Plane Intersection Calculating Step)

The feature point detection unit 34 calculates a pixel position (pixel coordinates) of an intersection between the half line CL and the image plane IP. The intersection is a projected point IC obtained by projecting the center VC of the approximate circle on the virtual plane VP onto the image plane IP.

### (Step S68: Feature Point Determining Step)

The feature point detection unit 34 sets the position (pixel coordinates) of the intersection (i.e., the projected point IC) on the image plane IP obtained in step S66 as a position (dot center-of-gravity position) of a feature point of the calibration image IM.

After the above-described processes, the flowchart of the dot detection process ends.

### [Effects of First Embodiment]

Effects of the first embodiment will be described.

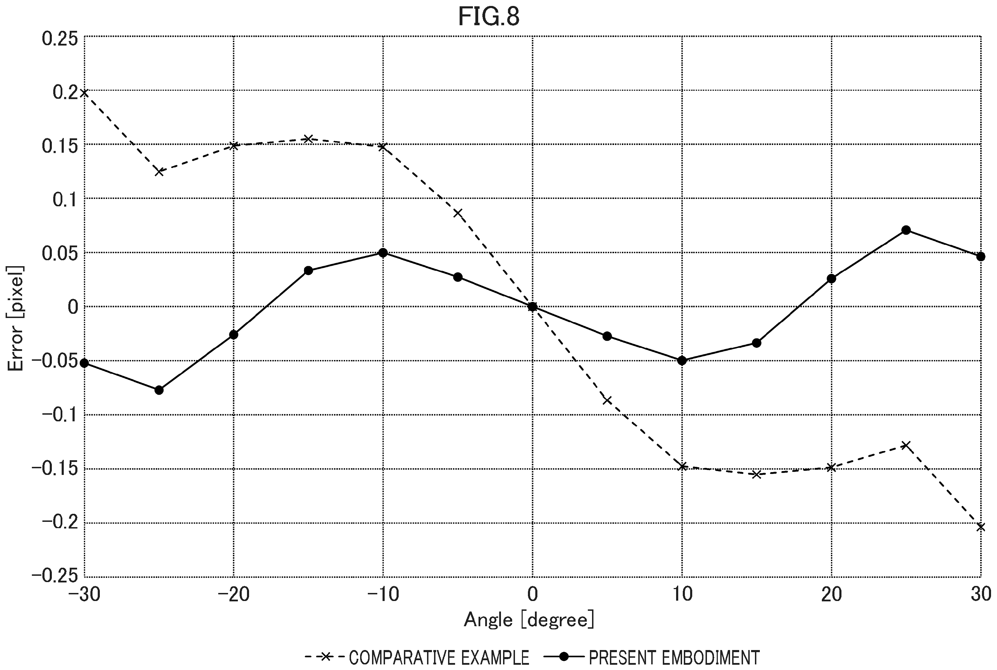

Figure 8 is a graph for explaining effects of the first embodiment. In Figure 8, the horizontal axis indicates a tilt angle (in degrees (°)) of the dot pattern DP with respect to the camera 12 while the vertical axis indicates an error (in pixels) in detection of a dot center-of-gravity position. A solid line in Figure 8 shows a detection error in a case where a dot center-of-gravity position is detected by the feature point detection process according to the first embodiment. A broken line in Figure 8 shows a detection error in a case as a comparative example where a dot center-of-gravity position is two-dimensionally and directly detected from a calibration image.

As can be seen from Figure 8, in the comparative example, (an absolute value of) the detection error of a dot center-of-gravity position increases as (an absolute value of) the tilt angle of the dot pattern DP with respect to the camera 12 increases.

In contrast, in the feature point detection process according to the first embodiment, a circle is fitted to a projection image obtained by projecting the contour of the dot image DI on the image plane IP, thereby obtaining the optimized virtual plane VP. Since a position of the projected point obtained by projecting the center of the circle (approximate circle) on the optimized virtual plane VP onto the image plane IP is set as the dot center-of-gravity position, it is possible to obtain coordinates (pixel coordinates) of the dot center-of-gravity position having a minimum projection distortion error.

For this reason, errors in detection of a dot center-of-gravity position are smaller overall in the first embodiment than in the comparative example. Although (an absolute value of) the detection error of the dot center-of-gravity position tends to increase as (an absolute value of) the tilt angle of the camera 12 with respect to the dot pattern DP increases in the comparative example, (an absolute value of) the detection error of the dot center-of-gravity position can be kept within a fixed range ((an absolute value of) the detection error can be kept at or below 0.1 pixels in the example shown in Figure 8) in the first embodiment even in a case where (an absolute value of) the tilt angle increases.

Thus, according to the first embodiment, a dot center-of-gravity position can be detected without being affected by the non-telecentric optical system, which leads to excellent tilt robustness. In the first embodiment, it is possible to obtain a position (dot center-of-gravity position) of a feature point on a calibration image IM, with high-accuracy. This enhances accuracy in calibration of the camera 12.

Since the first embodiment provides excellent tilt robustness, an orientation and a position of the camera 12 with respect to the dot pattern DP can be set with a high degree of freedom. This offers excellent convenience for users.

According to the first embodiment, a search for an optimized virtual plane VP in the three-dimensional space is conducted by rotating the virtual plane VP around an axis parallel to a direction (dot long axis direction) orthogonal to a direction in which the dot image DI is likely to be distorted on an image plane IP of the calibration image IM. Rotation of the virtual plane VP around one axis enables efficient search for the optimized virtual plane VP. Note that the search for the optimized virtual plane VP is not limited to searching by rotating the virtual plane VP about one axis. The search may instead be performed by rotating the virtual plane VP about any two or three axes.

### <Second Embodiment>

A second embodiment will be described. Note that a configuration of a calibration apparatus 10 is the same as that in the first embodiment (see Figure 2) and that a description thereof will be omitted.

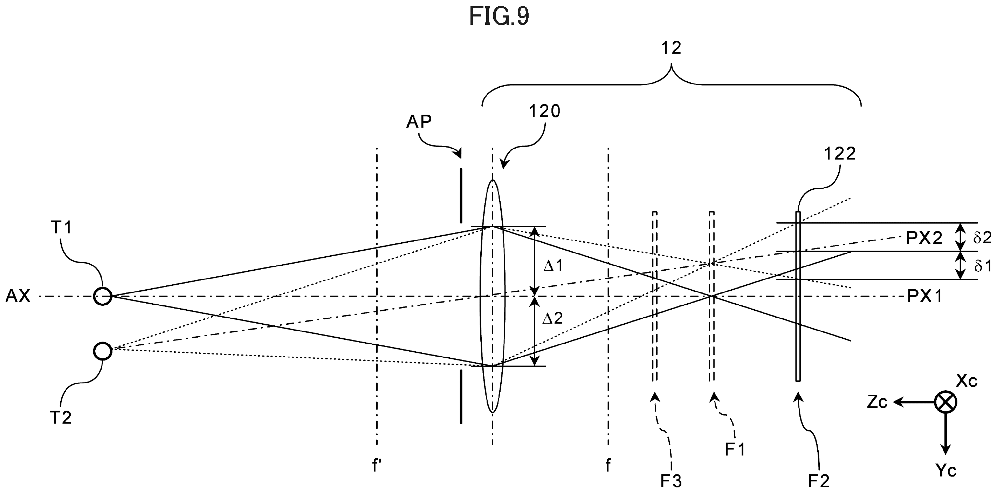

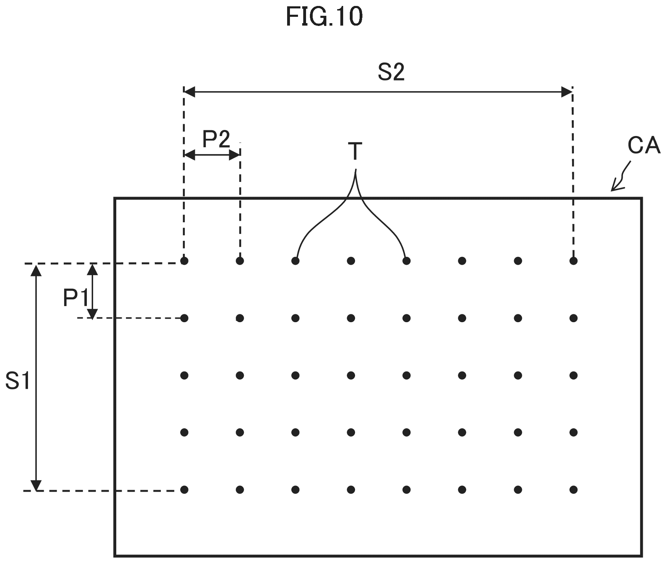

In the second embodiment, a calibration process of a camera 12 is conducted based on a plurality of calibration images IM obtained by capturing a reduced-size target (tiny target) in a defocused state by the camera 12. Figure 9 is a drawing showing an example in which a calibration pattern CA is captured by the camera 12, and Figure 10 is a plan view of the calibration pattern CA.

As shown in Figure 9, the camera 12 includes a lens (objective lens) 120 and an image sensor (including, for example, a charge coupled device (CCD) or a complementary metal oxide semiconductor (CMOS)) 122. In the example shown in Figure 9, only two targets T1 and T2 are shown as representatives of a plurality of targets T on the calibration pattern CA for brevity. Reference characters PX1 and PX2 in Figure 9 denote optical axes of lights traveling from the targets T1 and T2, respectively, toward the image sensor 122. In the example shown in Figure 9, the optical axis PX1 coincides with the optical axis AX of the lens 120. In Figure 9, let F1 be an in-focus position where images of the targets T1 and T2 are in focus via the lens 120; F2, a defocus position farther than the in-focus position F1 (on a side opposite to the side with the lens 120) of defocus positions where the images are out of focus; and F3, a defocus position nearer than the in-focus position F1 (on the side with the lens 120). As an example, Figure 9 shows a case where the image sensor 122 is arranged at the defocus position F2. Note that reference characters f' and f in Figure 9 denote a front focal position and a rear focal position, respectively, of the lens 120.

Each target T on the calibration pattern CA is a reduced-size dot (small-sized dot) (circle marker). A shape in plan view of the dot is a generally perfect circular shape. A size (diameter) of the target T depends on, for example, a relationship with at least one of a focal length of the camera 12 (a focal length of the lens 120), a distance between the camera 12 and the target T (a distance along the optical axis between the lens 120 and the target T), a pixel size of the image sensor 122 of the camera 12, or a calibration tolerance (allowable error in pixels). Note that the target T is not limited to a reduced-size dot and may be a reduced-size point light source.

Note that the size (diameter) of each target T on the calibration pattern CA is preferably such that the size of a region occupied by an image of the target T on the image sensor 122 is equal to or less than one pixel when the target T is captured by the image sensor 122 at the in-focus position F1. For example, in a case where the focal length (rear focal length) of the lens 120 is 8 mm, a center-to-center distance between the camera 12 and the target T is 300 mm, and a pixel size of the image sensor 122 is 2.74 µm, the diameter φ of the target T is preferably equal to or less than 102.75 µm. Note that the size of the target T may be made larger than the above-described example depending on the calibration tolerance.

In a case where a lens appropriately designed and manufactured is used as the lens 120 (e.g., a case where the optical axis AX of the lens 120 coincides with a center of an aperture stop AP of the lens 120), when the target T is captured, Δ1 = Δ2 holds in terms of a height of incident light at a position of the lens 120. In this case, δ1 = δ2 holds in terms of an image height at the defocus position F2 (a dimension in a YC direction of a defocused image of the target T). Note that although not shown, the same as the defocus position F2 applies to the defocus position F3.

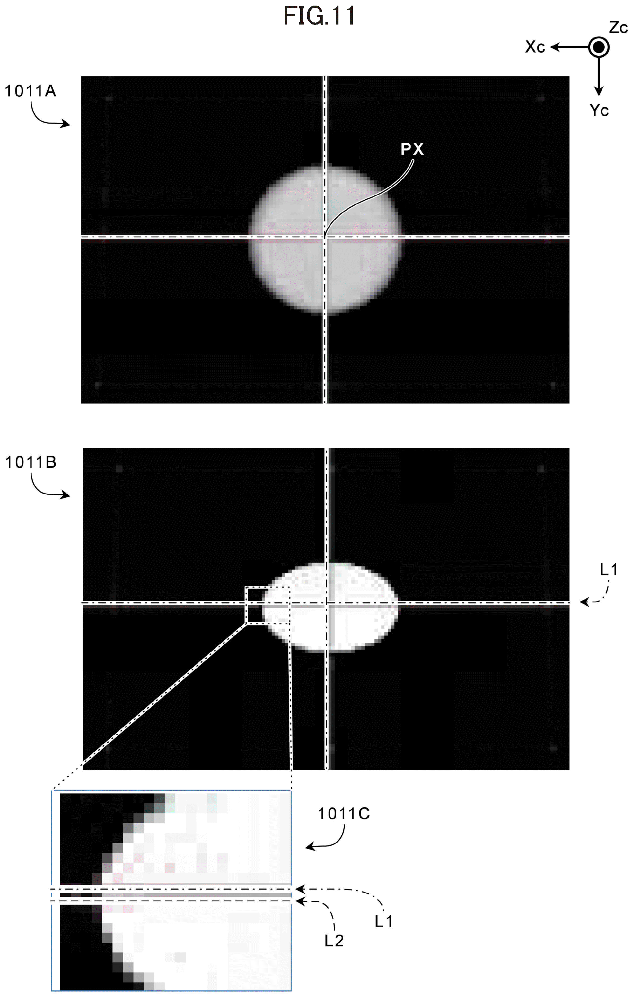

Reference character 1011A in Figure 11 denotes an image (according to a working example) of the target T captured by the image sensor 122 arranged at the defocus position F2. In 1011A of Figure 11, a centerline of the image of the target T overlaps with and coincides generally with an optical axis PX of light from the target T, as described with reference to Figure 9. Note that the same applies to a case where the target T is captured by the image sensor 122 arranged at the defocus position F3.

Reference character 1011B in Figure 11 denotes an image (according to a comparative example) of a dot (a non reduced-size target), an image captured in an in-focus state of which is comparable in size to the image in 1011A in Figure 11. In this case, a centerline L1 of the image of the dot deviates from a line L2 passing through a center of gravity of the image of the dot, as shown in an enlarged view indicated by reference character 1011C in Figure 11.

In contrast, in a case where the reduced-size target T is captured in a defocused state, a centerline of an image of the target T coincides with an optical axis (AX or AX1), and a center (feature point) of the target T can be detected with high accuracy.

Since each target T on the calibration pattern CA is minimized in the second embodiment, a position of a feature point (a center-of-gravity position of the target T) can be detected with high accuracy without being affected by a non-telecentric optical system even in a case where the calibration pattern CA is captured in a state where the calibration pattern CA is tilted with respect to the camera 12. Although reduction of size of the target T increases susceptibility to luminance noise, in the second embodiment the target T is captured in a defocused state, it is possible to detect a position of a feature point while effectively suppressing influence of luminance noise.

Note that although each reduced-size target T is made in a generally perfect circular shape (dot shape) in the second embodiment, the present invention is not limited to this. Any shape may be adopted as long as a center-of-gravity position and a center position of the target T coincide in a defocused image. For example, the shape may be a shape symmetric with respect to two directions orthogonal to each other, such as an elliptical shape, or a point-symmetric shape.

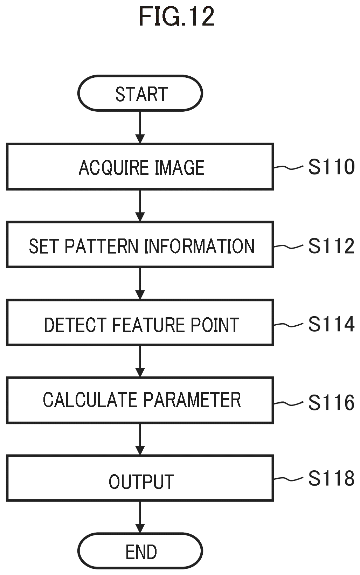

A processing procedure (an example of a calibration method) for a calibration process to be executed by the calibration apparatus 10 according to the second embodiment will be described below. Figure 12 is a flowchart showing overall processing of the calibration process to be executed by the calibration apparatus 10 according to the second embodiment. Note that various initialization processes, such as checking operation of units of the calibration apparatus 10, are assumed to have been performed at the start of the flowchart shown in Figure 12.

### (Step S110: Image acquisition step)

First, an image acquisition unit30 acquires a plurality of calibration images IM captured with the camera 12, and stores the plurality of calibration images IM in a storage unit22. In the second embodiment, a calibration pattern in which reduced-size targets T (dots or point light sources) satisfying the above-described size condition are arrayed in a matrix is used as a calibration pattern CA.

The image acquisition unit30 may acquire the calibration images IM from the camera 12 through a cable or a recording medium. Alternatively, the calibration images IM may be stored in an external storage device, such as an external server installed outside the calibration apparatus 10, and the image acquisition unit30 may acquire the calibration images IM from the external storage device via a wired or wireless network.

The plurality of calibration images IM are obtained by capturing, with the camera 12, the calibration pattern from directions different from each other. The number of calibration images IM is at least two or more, preferably five or more, more preferably ten or more. Note that capturing of the calibration pattern by the camera 12 may be conducted at least before the image acquisition step.

### (Step S112: Pattern Information Setting Step)

A pattern information setting unit32 sets pattern information including information on the arrangement of the targets T in the calibration pattern CA. For example, the pattern information includes the numbers of targets in a vertical direction (column direction) and a horizontal direction (row direction) in the calibration pattern CA. In the example shown in Figure 10, the number of targets in the vertical direction in the calibration pattern CA is five, and the number of targets in the horizontal direction is eight. The pattern information includes overall lengths S1 and S2 (see Figure 10) in the vertical direction and the horizontal direction of the calibration pattern CA in addition to the numbers of targets in the vertical direction and the horizontal direction of the calibration pattern CA. Note that the pattern information may include pitches P1 and P2 (intervals) in the vertical direction and the horizontal direction of the calibration pattern CA instead of the overall lengths S1 and S2 in the vertical direction and the horizontal direction of the calibration pattern CA. With this pattern information, a relative positional relationship among the targets T on the calibration pattern CA can be identified. Note that the pattern information is information used by a feature point detection unit34 (to be described later) to identify a point (object point) in a three-dimensional space corresponding to a feature point (image point) in an image coordinate system.

The pattern information setting unit32 may acquire, for example, pattern information input by an operator via an operation unit14. Alternatively, pattern information may be stored in advance in the storage unit22, and the pattern information setting unit32 may acquire the pattern information from the storage unit22. Note that the pattern information setting step only needs to be performed at least before a parameter calculating step (to be described later). For example, the pattern information setting step may be performed before the image acquisition step or after the feature point detecting step.

### (Step S114: Feature Point Detecting Step)

A feature point detection unit34 executes a feature point detection process of detecting a plurality of feature points for each of the plurality of calibration images IM captured by the camera 12. Specifically, the feature point detection unit34 sequentially reads the plurality of calibration images IM stored in the storage unit 22. The feature point detection unit34 performs the processing below for each of the read calibration images IM. After the feature point detection unit 34 subjects each calibration image IM to predetermined image processing (e.g., binarization processing or grayscale transform), the feature point detection unit34 detects feature points (image points) from the calibration image IM and obtains coordinates (pixel coordinates) of each feature point in the image coordinate system. In the present embodiment, a center-of-gravity position of an image of each target T is detected as a feature point from a calibration image IM obtained by capturing the target T on the calibration pattern CA in a defocused state by the camera 12. Coordinates of a feature point detected by the feature point detection unit 34 are temporarily stored in the storage unit 22.

In a case where there is any calibration image IM, from which no feature point is successfully detected, among the plurality of calibration images IM, the feature point detection unit 34 performs an exclusion process of excluding the calibration image IM, from which no feature point is successfully detected, from a parameter calculating process (to be described later). For this reason, the parameter calculating process can calculate camera parameters CP based on calibration images IM left after the exclusion process (i.e., calibration images IM, from which feature points are successfully detected) of the plurality of calibration images IM.

### (Step S116: Parameter Calculating Step)

A parameter calculation unit 36 executes a process of calculating the camera parameters CP. Specifically, the parameter calculation unit 36 calculates the camera parameters CP based on positions of the feature points on the calibration images IM detected by the feature point detection unit 34 and the pattern information set by the pattern information setting unit 32. The camera parameters CP can be calculated using a publicly known method (e.g., a Zhang's method), as in the first embodiment.

The camera parameters CP calculated by the parameter calculation unit 36 are intrinsic parameters (focal lengths fₓ and f_{y} and an optical center (cₓ, c_{y})) and distortion parameters (distortion coefficients k₁, k₂, k₃, p₁, and p₂) of the camera 12. The parameter calculation unit 36 stores the calculated camera parameters CP in the storage unit 22.

### (Step S118: Output Step)

The parameter calculation unit36 outputs a result of calculating the camera parameters CP to an output unit 16. This allows the operator to acquire the camera parameters CP. The operator can perform image correction and the like on an image captured by the camera 12 based on the camera parameters CP.

After the above-described processes, the flowchart of the overall processing of the calibration process to be executed by the calibration apparatus 10 ends.

### [Working Example of Second Embodiment]

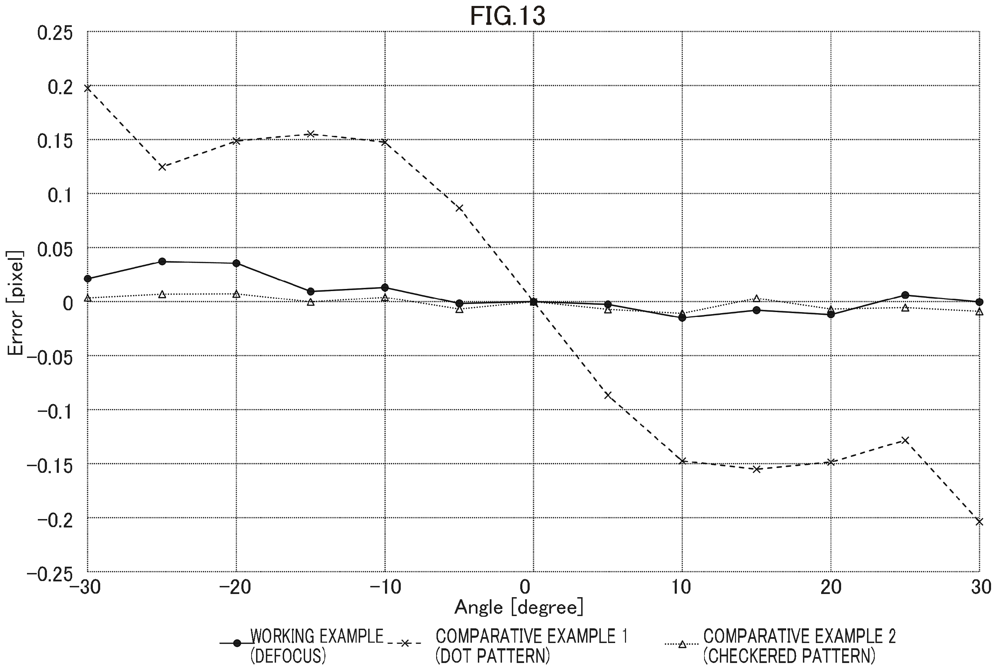

Figure 13 is a graph showing tilt robustness of calibration methods. The horizontal axis in Figure 13 indicates a tilt angle (in degrees) of the camera with respect to a calibration pattern while the vertical axis indicates an error (in pixels).

A working example (defocus) of the second embodiment illustrates an example in which a target according to the second embodiment was captured in a defocused state and then calibration was performed. A first comparative example illustrates an example in which calibration was performed using a dot pattern shown as an example by reference character 1025C in Figure 25, and a second comparative example illustrates an example in which calibration was performed using a checkered pattern shown as an example by reference character 1025B in Figure 25.

In the first comparative example, an object closer to the camera was captured so as to appear larger in size, as shown in Figure 27. The larger (an absolute value of) the tilt angle with respect to a dot pattern, the larger (an absolute value of) the error, and the lower the tilt robustness.

In the working example, (an absolute value of) the error was small regardless of (an absolute value of) the tilt angle of the camera 12 with respect to the target. In the second comparative example, (an absolute value of) the error was small regardless of (an absolute value of) the tilt angle of the camera 12 with respect to the checkered pattern.

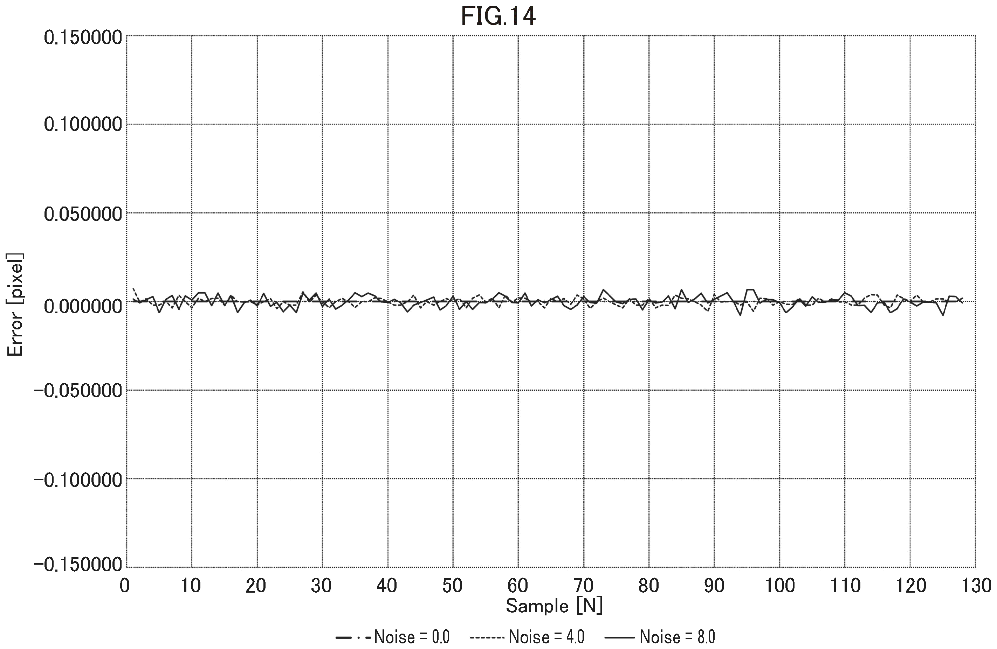

Figures 14 to 16 are graphs showing luminance-noise robustness of the calibration methods, and the graphs correspond to the working example (defocus), the first comparative example (dot pattern), and the second comparative example (checkered pattern). The horizontal axis in each of Figures 14 to 16 indicates a sample number while the vertical axis indicates an error (in pixels).

In each of Figures 14 to 16, luminance noise Noise to be added at the time of capturing a calibration pattern (a corresponding one of CA in Figure 10 and 1025C and 1025B in Figure 25) was increased from 0.0 to 4.0 to 8.0.

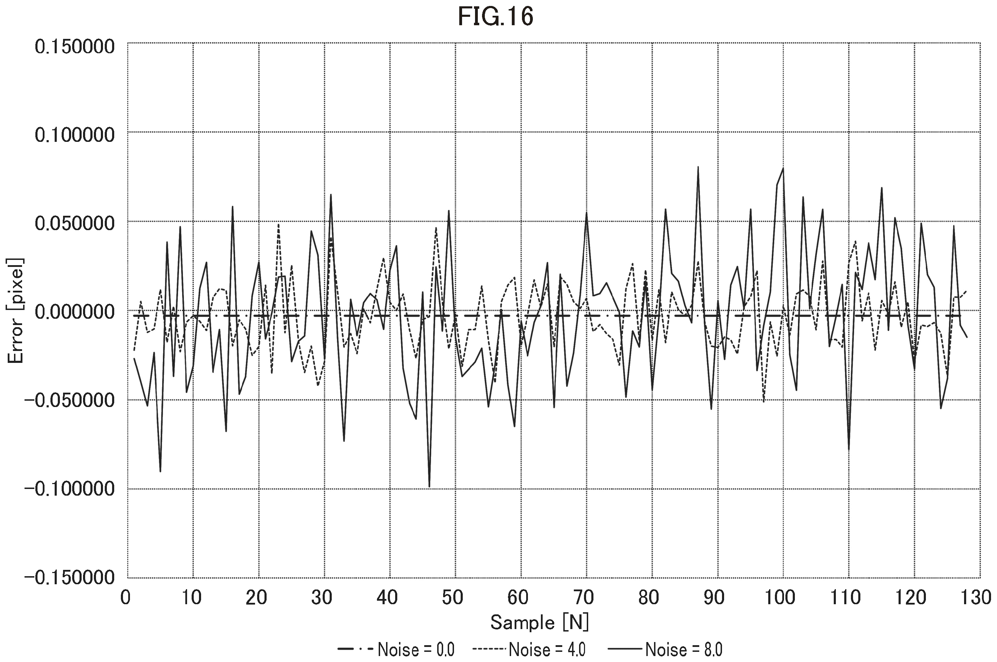

In the second comparative example (Figure 16), a luminance gradient (derivative value) was used to detect an edge in the checkered pattern. An error increased notably with luminance noise. It can be seen that, of the examples shown in Figures 14 to 16, the second comparative example was most sensitive to luminance noise.

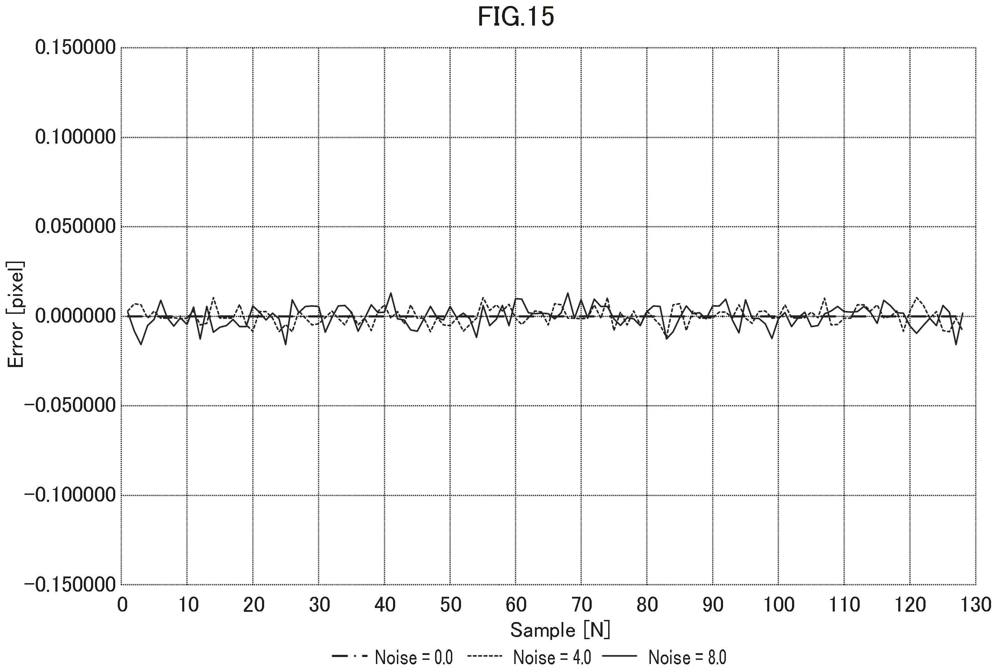

In the first comparative example (Figure 15), which used the dot pattern, luminance-noise robustness was higher than that of the checkered pattern.

The working example (Figure 14) had higher luminance-noise robustness than both the first and second comparative examples.

The above-described results are summarized in the table below. The working example exhibited both good tilt robustness and good luminance-noise robustness.

**[Table 1]**

| | Tilt robustness | Luminance-noise robustness |
|---|---|---|
| Working example | Good | Excellent |
| 1st comp. example | Poor | Good |
| 2nd comp. example | Good | Poor |

### [Effects of Second Embodiment]

According to the second embodiment, a calibration process is executed based on a plurality of calibration images IM obtained by capturing the calibration pattern CA including reduced-size targets T in a defocused state by the camera 12. For this reason, even in a case where the calibration pattern CA is captured in a state of being inclined with respect to the camera 12, a position of a feature point (a center-of-gravity position of each target T) can be detected with high accuracy without being affected by the non-telecentric optical system. Additionally, capturing of the target T in a defocused state makes it possible to detect a position of a feature point while effectively curbing influence of luminance noise associated with minimization of the target T. It is thus possible to detect a feature point in a calibration image IM with high accuracy, and enhance accuracy of calibration of the camera 12.

### <Third Embodiment>

In addition to the problem addressed by the present invention described above, there are other considerations. Specifically, in a case where plane patterns, such as a dot pattern, a grid pattern, and a checkered pattern, are used as calibration targets, it may be impossible to accurately know a positional error and the like in a position of a feature point on each pattern. Calibration of the calibration target (calibrator) is difficult, which may reduce accuracy of camera calibration.

Under the circumstances, a third embodiment aims to provide a camera calibration method capable of enhancing accuracy of camera calibration.

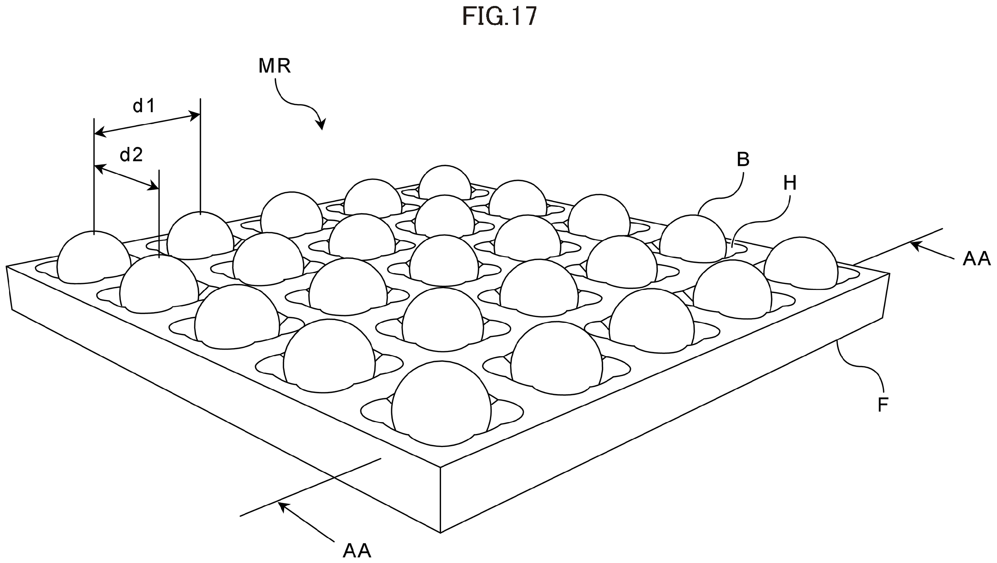

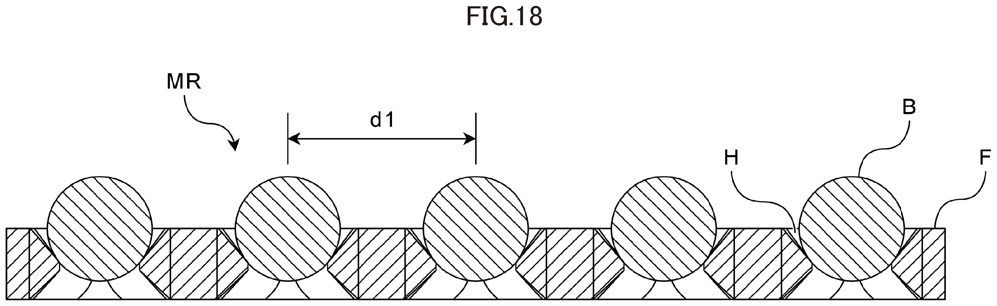

The third embodiment will be described below. Note that, since a calibration apparatus 10 is the same as that in the first embodiment (see Figure 2) and that a description thereof will be omitted. In the third embodiment, a calibration target MR (to be described later) (see Figures 17 and 18) is used instead of the above-described calibration patterns.

Figure 17 is a perspective view showing the calibration target MR, and Figure 18 is a sectional view taken along line AA-AA in Figure 17.

The calibration target MR is an object (spherical target) in which a plurality of balls B are arranged in a housing F. Assume that the interval between the balls and diameters of the balls B are known. Information on the calibration target MR (e.g., information on the type of the calibration target MR, arrangement of, the interval between, and the diameters of the balls B, which will be referred to as pattern information hereinafter) is stored in a storage unit22 of the calibration apparatus 10.

The housing F is, for example, a member in a planar shape (in the form of a plate) made of a material with high stiffness and high temporal stability (e.g., metal or ceramic). A plurality of recesses H are arranged in an array in the housing F.

Each ball B is, for example, a spherical member made from a material with high stiffness and high temporal stability (e.g., metal). Each ball B is fit into the recess H and fixed to the housing F. The ball B is an example of a reflector and has reflective characteristics to (specularly) reflect illumination light incident perpendicularly to its surface back in the incidence direction. Sphericity (see, for example, Japanese Industrial Standards (JIS) B 1501:2009) of the ball B is high, and a surface of the ball B is mirror-finished. Surface roughness (arithmetical mean roughness) Ra (JIS B 0601:2001) of the mirrored surface is equal to or less than 0.2 µm, for example.

Note that the surface of the ball B may be a rough surface instead of a mirrored surface as long as reflected light (to be described later) can be detected. A rough surface as used herein refers to a surface that is rougher than a mirrored surface (Ra > 0.2 µm, for example) and satisfies at least one of the conditions below:
(A) the surface can reflect specularly reflected lights (L21 and L22) with intensity equal to or more than a predetermined value; and
(B) specularly reflected lights (L21 and L22) that are distinguishable from diffusely reflected light produced by illumination light incident non-normally (non-perpendicularly) on the surface of the ball B from a light source 50 (e.g. the specularly reflected lights being more intense than the diffusely reflected light) are obtained from the surface (a difference between intensity of reflected light of illumination light incident vertically on the surface of the ball B and intensity of diffusely reflected light diffusely reflected around a vertical incident position is equal to or more than a threshold).

The ball B may be, for example, one that is made of glass or sapphire and has retroreflective properties (see JIS Z 8713:1995).

Note that although the balls B are arranged at equal intervals in the example shown in Figures 17 and 18, the present invention is not limited to this. For example, intervals d1 and d2 between the balls B only need to be previously known. The intervals d1 and d2 between the balls B may be different or the balls B may be arranged at unequal intervals. The diameters of the balls B may be different from each other. The calibration target MR may be, for example, a one-dimensional calibrator (ball-bar type calibrator) in which a plurality of balls B are arranged on a linear housing (bar) or calibrator in which a plurality of balls B are arranged at an L-shaped housing (bar).

According to the calibration target MR configured in the above-described manner, positions (three-dimensional coordinates) of the balls B arranged in the housing F can be measured by a high-accuracy measurement apparatus (traceable three-dimensional coordinate measuring apparatus). This allows traceable calibration on the calibration target MR which is actually used. Thus, calibration on a camera 12 can be performed with high accuracy based on high-accuracy pattern information (including information on the arrangement of, the interval between the balls B, and the diameters of the balls B).

Note that, although a ball B is illustrated as an example of a reflector in the third embodiment, the present invention is not limited to this. For example, a calibration target in which a retroreflector (see JIS Z 8713:1995, a cube corner, for example) is arranged may be used. Note that, although a tilt angle range within which retroreflective properties can be obtained for incident light may be narrower in a retroreflector than in the ball B, A retroreflector can be used when an imaging system that can tolerate the tilt angle condition is used.

For simplicity, a case will be described in which the balls B are arranged at equal intervals along two directions orthogonal to each other, and the intervals d1 and d2 between adjacent balls B in the respective directions are equal.

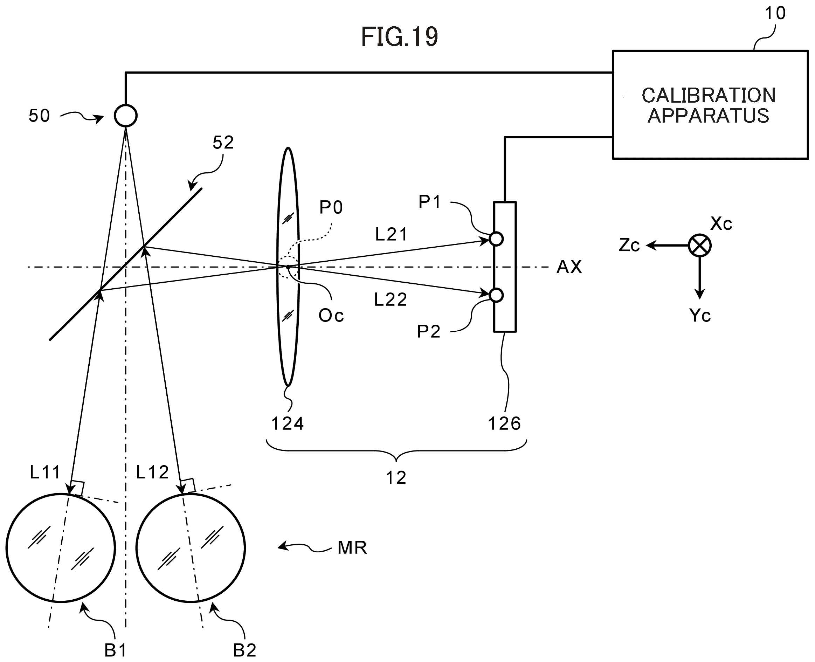

Figure 19 is a diagram for explaining an example of calibration using the calibration target MR. Note that, although the light source 50 is arranged on a perpendicular bisector of a line segment connecting centers of balls B1 and B2 in the example shown in Figure 19 for brevity, the present invention is not limited to this.

As shown in Figure 19, when the calibration target MR is captured, illumination light is applied to the calibration target MR coaxially with a lens 124 of the camera 12 (coaxial illumination). An imaging system for the calibration target MR includes the light source 50, a half mirror 52, and the camera 12. The camera 12 includes the lens (objective lens) 124 and an image sensor (including, for example, a charge coupled device (CCD) or a complementary metal oxide semiconductor (CMOS)) 126. A computation control unit20 (see Figure 2) of the calibration apparatus 10 performs light emission control of the light source 50, imaging control of the camera 12, and the like.

The light source 50 is a device which applies visible light to the calibration target MR. The light source 50 includes, for example, a light-emitting diode. The light source 50 is arranged at a position optically conjugate to a camera origin (an object-side principal point) O_{c} via the half mirror 52. The camera origin O_{c} is located, for example, at a center (optical axis center) of the lens 124 of the camera 12.

Of illumination light emitted from the light source 50, components L11 and L12 perpendicularly incident on surfaces of the balls B1 and B2 are reflected (retroreflected) toward the light source 50 along respective incident optical paths. Reflected lights L21 and L22 reflected on the surfaces of the balls B1 and B2 are reflected by the half mirror 52, pass through the lens 124, and form an image on the image sensor 126. With this operation, an image of the reflected lights L21 and L22 retroreflected by the balls B1 and B2 are obtained.

Reference characters P1 and P2 in Figure 19 denote positions (focal positions) in the image sensor 126 at which images of the reflected lights L21 and L22 from the balls B1 and B2 are formed, and a reference character P0 denotes a conjugate image of the light source 50.

An image acquisition unit30 acquires a calibration image IM including the images P1 and P2 of the reflected lights L21 and L22 captured by the image sensor 126.

A pattern information setting unit32 acquires pattern information on the calibration target MR from the storage unit22.

A feature point detection unit 34 detects the images P1 and P2 (bright-field observation images) of the reflected lights L21 and L22 and detects center-of-gravity positions of the images P1 and P2.

A parameter calculation unit 36 calculates camera parameters CP based on positions of feature points (centers of gravity of the images P1 and P2 of the reflected lights L21 and L22) detected by the feature point detection unit 34 and the pattern information (e.g., information on the arrangement of the balls B1 and B2 and the interval between the balls B1 and B2 in the calibration target MR, and the like) set by the pattern information setting unit 32.

As described above, in the third embodiment, the light source 50 is installed at a position conjugate to the camera origin O_{c} (object-side principal point) via the half mirror 52. Thus, the center (center of gravity) of the image of the light source 50 reflected by the calibration target MR falls on a line connecting a viewpoint (camera origin O_{c}) and a center of the calibration target MR.

In the third embodiment, the reflected lights L21 and L22 vertically reflected from the surfaces of the balls B1 and B2 are observed. For this reason, according to the third embodiment, distortion and an error arising from pattern tilt do not occur, and accuracy of a detected pixel position of the calibration target MR is not affected by an orientation of the calibration target MR. This allows high-accuracy conduct of calibration of the camera 12. It is also possible to provide a traceable calibration target.

Note that, although the reflected lights L21 and L22 from the two balls B1 and B2 are captured in the example shown in Figure 19, the number of balls used for calibration is not limited to two, and three or more balls may be used.

Although the configuration is such that illumination light passing through the half mirror 52 reaches the balls B1 and B2 and such that reflected light reflected by the half mirror 52 reaches the camera 12 in the example shown in Figure 19, arrangement of an optical system in an imaging system is not limited to this. For example, the configuration may be set such that illumination light reflected by the half mirror 52 reaches the balls B1 and B2 and such that reflected light passing through the half mirror 52 reaches the camera 12.

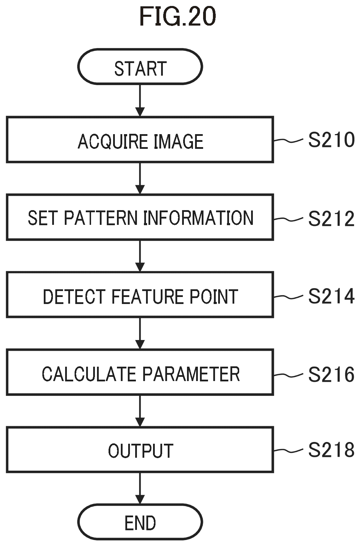

A processing procedure (an example of a calibration method) for a calibration process to be executed by the calibration apparatus 10 according to the third embodiment will be described below. Figure 20 is a flowchart showing overall processing of the calibration process to be executed by the calibration apparatus 10 according to the third embodiment. Note that various initialization processes, such as checking of operation of units of the calibration apparatus 10, are assumed to have been performed at the start of the flowchart shown in Figure 20.

### (Step S210: Image acquisition step)

First, the image acquisition unit30 acquires a plurality of calibration images IM captured with the camera 12, and stores the plurality of calibration images IM in the storage unit22.

The image acquisition unit30 may acquire the calibration images IM from the camera 12 through a cable or a recording medium. Alternatively, the calibration images IM may be stored in an external storage device, such as an external server installed outside the calibration apparatus 10, and the image acquisition unit30 may acquire the calibration images IM from the external storage device via a wired or wireless network.

### (Step S212: Pattern Information Setting Step)

The pattern information setting unit32 sets pattern information on the calibration target MR. For example, the pattern information includes information on arrangement of the balls B1 and B2 and the interval between the balls B1 and B2 in the calibration target MR, and the like. The pattern information is information used to define a point (object point) on a three-dimensional space corresponding to a feature point (image point) in an image coordinate system.

The pattern information setting unit32 may acquire, for example, pattern information input by an operator via an operation unit14. Alternatively, pattern information may be stored in advance in the storage unit 22, and the pattern information setting unit32 may acquire the pattern information from the storage unit 22. Note that the pattern information setting step only needs to be performed at least before a parameter calculating step (to be described later). For example, the pattern information setting step may be performed before the image acquisition step or after the feature point detecting step.

### (Step S214: Feature Point Detecting Step)

The feature point detection unit34 executes a feature point detection process of detecting a plurality of feature points for each of the plurality of calibration images IM captured by the camera 12. Specifically, the feature point detection unit34 sequentially reads the plurality of calibration images IM stored in the storage unit22. The feature point detection unit34 performs the processing below for each of the read calibration images IM. After the feature point detection unit34 subjects each calibration image IM to predetermined image processing (e.g., binarization processing or grayscale transform), the feature point detection unit34 detects feature points (image points) from the calibration image IM and obtains coordinates (pixel coordinates) of each feature point in the image coordinate system. In the present embodiment, for example, the images P1 and P2 of the reflected lights L21 and L22 are detected from bright-field observation images of the balls B1 and B2 shown in Figure 19, and the center-of-gravity positions of the images P1 and P2 are detected as feature points. Coordinates of the feature points detected by the feature point detection unit34 are temporarily stored in the storage unit22.

In a case where there is any calibration image IM, from which no feature point is successfully detected, among the plurality of calibration images IM, the feature point detection unit34 performs an exclusion process of excluding the calibration image IM, from which no feature point is successfully detected, from a parameter calculating process (to be described later). For this reason, the parameter calculating process can calculate the camera parameters CP based on calibration images IM left after the exclusion process (i.e., calibration images IM, from which feature points are successfully detected) of the plurality of calibration images IM.

### (Step S216: Parameter Calculating Step)

The parameter calculation unit36 executes a process of calculating the camera parameters CP. Specifically, the parameter calculation unit36 calculates the camera parameters CP based on positions of the feature points on the calibration images IM detected by the feature point detection unit34 and the pattern information set by the pattern information setting unit32. The camera parameters CP can be calculated using a publicly known method (e.g., a Zhang's method), as in the first embodiment.

The camera parameters CP calculated in the parameter calculation unit36 are intrinsic parameters (focal lengths fₓ and f_{y} and an optical center (cₓ, c_{y})) and distortion parameters (distortion coefficients k₁, k₂, k₃, p₁, and p₂) of the camera 12. The parameter calculation unit36 stores the calculated camera parameters CP in the storage unit22.

### (Step S218: Outputting Step)

The parameter calculation unit36 outputs a result of calculating the camera parameters CP to an output unit16. This allows the operator to acquire the camera parameters CP. The operator can perform image correction and the like on an image captured with the camera 12 based on the camera parameters CP.

After the above-described processes, the flowchart of the overall processing of the calibration process to be executed by the calibration apparatus 10 ends.

### [Working Example of Third Embodiment]

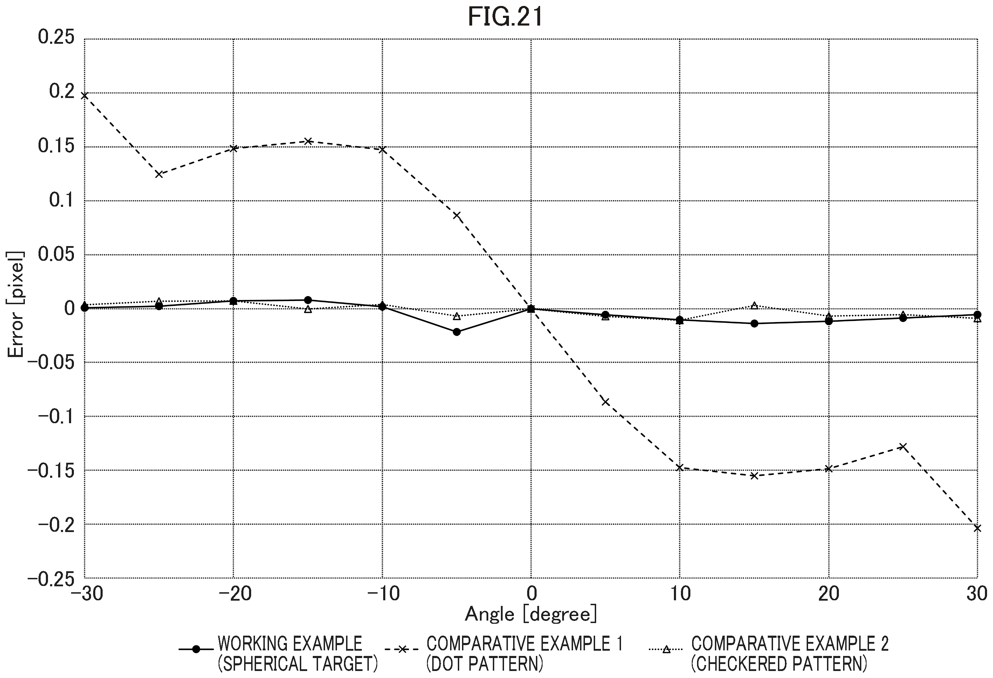

Figure 21 is a graph showing tilt robustness of calibration methods. The horizontal axis in Figure 21 indicates a tilt angle (in degrees) of the camera with respect to the calibration target MR or a calibration pattern while the vertical axis indicates an error (in pixels).

A working example of the third embodiment illustrates an example in which calibration was performed using the calibration target MR (spherical target). A first comparative example illustrates an example in which calibration was performed using a dot pattern shown as an example by reference character 1025C in Figure 25, and a second comparative example illustrates an example in which calibration was performed using a checkered pattern shown as an example by reference character 1025B in Figure 25.

In the case of the first comparative example, an object closer to the camera was captured so as to appear larger, as shown in Figure 27. The larger (an absolute value of) the tilt angle with respect to a dot pattern, the larger (an absolute value of) the error, and the lower the tilt robustness.

In the working example, (an absolute value of) the error was small regardless of (an absolute value of) the tilt angle of the camera 12 with respect to the calibration target MR. In the second comparative example, (an absolute value of) the error was small regardless of (an absolute value of) the tilt angle of the camera with respect to the checkered pattern.

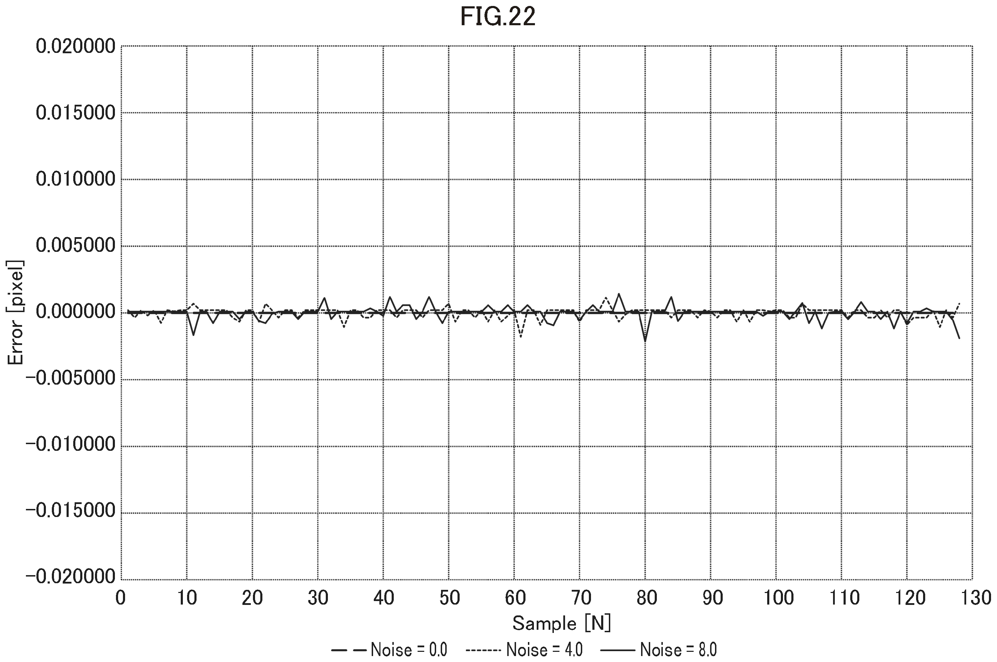

Figures 22 to 24 are graphs showing luminance-noise robustness of the calibration methods, and the graphs correspond to the working example (spherical target), the first comparative example (dot pattern), and the second comparative example (checkered pattern). The horizontal axis in each of Figures 22 to 24 indicates a sample number while the vertical axis indicates an error (in pixels). Note that the range of values of the vertical axis has been narrowed only in Figure 22 so as not to impair graph visibility.

In each of Figures 22 to 24, luminance noise Noise to be added at the time of capturing the calibration target MR or a calibration pattern increased from 0.0 to 4.0 to 8.0.

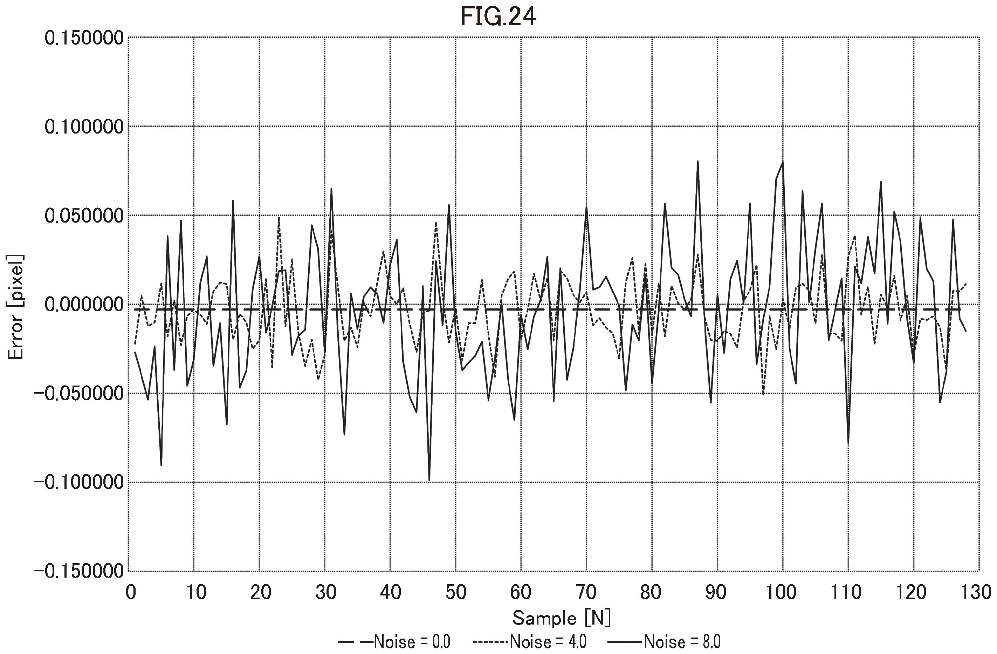

In the second comparative example (Figure 24), because a luminance gradient (derivative value) was used to detect an edge in the checkered pattern, the error (in pixels) increased notably as luminance noise increased. It can be seen that, of the examples shown in Figures 22 to 24, the second comparative example was most sensitive to luminance noise.

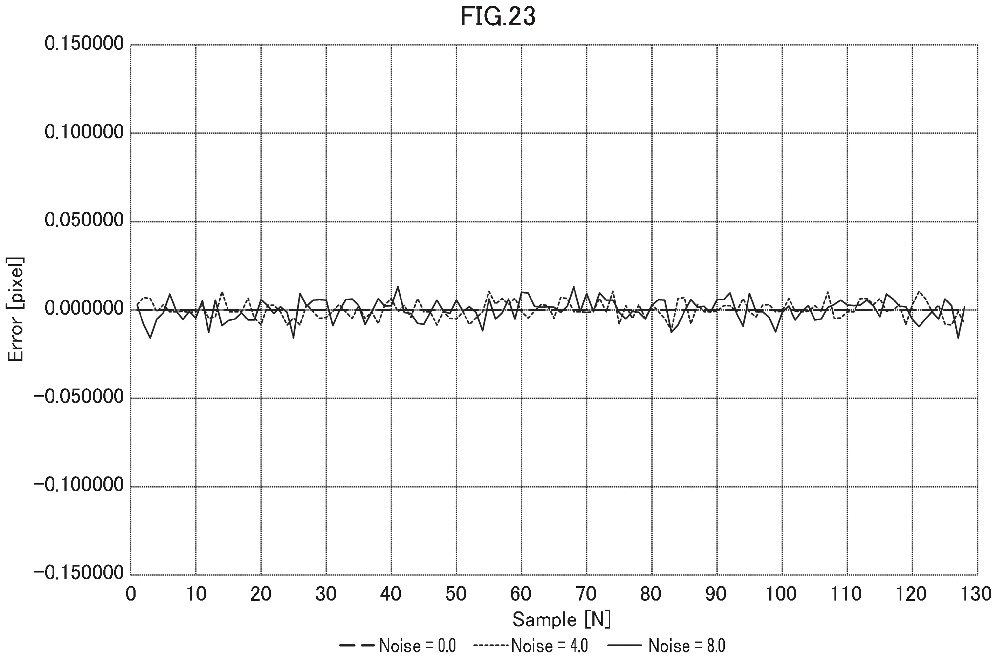

On the other hand, in the first comparative example (Figure 23) in which the dot pattern was used, luminance-noise robustness was higher than that of the checkered pattern.

The working example (Figure 22) had higher luminance-noise robustness than both the first and second comparative examples, as can be seen from the range of values of the vertical axis.

The above-described results are summarized in the table below. The working example exhibited both good tilt robustness and good luminance-noise robustness.

**[Table 2]**

| | Tilt robustness | Luminance-noise robustness |
|---|---|---|
| Working example | Good | Excellent |
| 1st comp. example | Poor | Good |
| 2nd comp. example | Good | Poor |

### [Effects of Third Embodiment]

According to the third embodiment, illumination light (coaxial illumination light) is emitted from the light source 50 arranged at a position conjugate to the camera origin O_{c} to the calibration target MR including a reflector (a ball B or a retroreflector) having reflective characteristics to reflect illumination light back in the incident direction, and reflected light from the reflector is captured by the camera 12 to acquire a calibration image IM. By detecting a position of the reflected light as a feature point from the calibration image IM, it is possible to achieve highly accurate calibration with excellent tilt robustness and luminance-noise robustness.

According to the third embodiment, by using the above-described calibration target MR, it is possible to measure the position (three-dimensional coordinates) of a reflector (a ball B or a retroreflector) with a high-accuracy measurement apparatus (traceable three-dimensional coordinate measuring apparatus). Thus, it is possible to perform traceable calibration of the calibration target MR, thereby improving the calibration accuracy.

The embodiments of the present invention have been described above. The present invention, however, is not limited to the above-described examples, and various changes or modifications may be made thereto without departing from the scope of the present invention.

### Reference Signs List

10 calibration apparatus
12 camera
14 operation unit
16 output unit
20 computation control unit
22 storage unit
30 image acquisition unit
32 pattern information setting unit
34 feature point detection unit
36 parameter calculation unit
50 light source
52 half mirror
120 lens
122 image sensor
124 lens
126 image sensor
IM calibration image
IP image plane
VP virtual plane
DI dot image
VC center
IC projected point
B group of half lines
T group of intersections
CL straight line
DP dot pattern
D dot
T, T1, T2 target
F1 in-focus position
F2 defocus position
F3 defocus position
MR calibration target
B ball
F housing

## Claims

1. A camera calibration method comprising:
an image acquisition step of acquiring a plurality of calibration images obtained by capturing, with a camera, a dot pattern having a plurality of periodically arranged dots;
a pattern information setting step of setting pattern information including information on arrangement of the dots;
a feature point detecting step of detecting feature points indicating positions of the dots from the calibration images; and
a parameter calculating step of calculating a parameter of the camera based on the feature points and the pattern information,
wherein the feature point detecting step comprises detecting a position of a center of gravity of each dot as a feature point, based on a projection image obtained by projecting a contour of each dot from an image plane of the calibration image onto a virtual plane set in a three-dimensional space.

2. The camera calibration method according to claim 1, wherein the feature point detecting step comprises:
obtaining a virtual plane that is optimized such that a circle is fitted to the projection image; and
detecting the position of the center of gravity of each dot as the feature point, based on the projection image on the obtained virtual plane.

3. The camera calibration method according to claim 1, wherein the feature point detecting step comprises:
when it is assumed that a circle obtained by performing an approximation process on a point cloud including a plurality of projected points obtained by projecting a plurality of contour points each indicating the contour of the dot from the image plane onto the virtual plane is an approximate circle, obtaining the virtual plane optimized such that an evaluation value indicating a fitting error of the approximate circle with respect to the point cloud is minimized or is less than or equal to a threshold; and
setting, as the position of the center of gravity of each dot, a position of a point obtained by projecting a center of the approximate circle from the optimized virtual plane onto the image plane.

4. The camera calibration method according to claim 3, wherein
the virtual plane comprises a plurality of virtual planes with different orientations in a three-dimensional space, and
the feature point detecting step comprises a search step of searching for the optimized virtual plane among the plurality of virtual planes based on the evaluation value indicating the fitting error of the approximate circle with respect to the point cloud.

5. The camera calibration method according to claim 4, wherein
the search step comprises:
calculating, while changing an orientation of the virtual plane to a plurality of orientations by rotating the virtual plane around an axis parallel to a long axis direction of the dot on the image plane, the evaluation value for each orientation; and
determining the optimized virtual plane based on the evaluation value calculated for each orientation.

6. The calibration method for the camera according to claim 4, wherein
the feature point detecting step comprises:
a contour point extracting step of extracting a plurality of contour points of one of the dots from the image plane;
a half line group generating step of generating a group of half lines each originating from an optical center of the camera and passing through one of the plurality of contour points of the dot on the image plane; and
an approximate circle calculating step of calculating the approximate circle based on a group of intersections between the group of half lines and the virtual plane.

7. A camera calibration apparatus comprising:
an image acquisition section configured to acquire a plurality of calibration images obtained by capturing, with a camera, a dot pattern having a plurality of periodically arranged dots;
a pattern information setting section configured to set pattern information including information on arrangement of the dots in the dot pattern;
a feature point detection section configured to detect feature points from the calibration images; and
a parameter calculation section configured to calculate a parameter of the camera based on the feature points and the pattern information,
wherein the feature point detection section detects a position of a center of gravity of each dot as a feature point, based on a projection image obtained by projecting a contour of each dot from an image plane of the calibration image onto a virtual plane set in a three-dimensional space.

8. A camera calibration method comprising:
an image acquisition step of acquiring a plurality of calibration images obtained by capturing a calibration pattern including a reduced-size target in a defocused state;
a pattern information setting step of setting pattern information on calibration;
a feature point detecting step of detecting, as a feature point, a center-of-gravity position of a defocused image of the target from each of the calibration images; and
a parameter calculating step of calculating a parameter of a camera based on the pattern information and a position of the feature point.

9. The camera calibration method according to claim 8, wherein a size of the reduced-size target is determined in accordance with at least one of a focal length of a camera that captures the target, a distance between the camera and the reduced-size target, or a pixel size of an image sensor of the camera.

10. The camera calibration method according to claim 8, wherein the size of the reduced-size target is determined such that a size of an image of the reduced-size target on an image sensor of the camera when the reduced-size target is captured in an in-focus state is equal to or less than one pixel.

11. The camera calibration method according to any one of claims 8 to 10, wherein the pattern information includes information on arrangement of the target in the calibration pattern.

12. The camera calibration method according to any one of claims 8 to 10, wherein the target has a shape symmetric with respect to two directions orthogonal to each other or a point-symmetric shape.

13. The camera calibration method according to claim 12, wherein the target has a dot shape.

14. The camera calibration method according to claim 12, wherein the target is a point light source.

15. A camera calibration method comprising:
an image acquisition step of capturing, with a camera arranged at a position optically conjugate to a light source, a reflected light of illumination light emitted from the light source to a calibration target including a reflector having a reflective characteristics to reflect the illumination light back in an incident direction to acquire a calibration image;
a pattern information setting step of setting pattern information on the calibration target;
a feature point detecting step of detecting, as a feature point, a focal position of the reflected light from the calibration image; and
a parameter calculating step of calculating a camera parameter based on the pattern information and a position of the feature point.

16. The camera calibration method according to claim 15, wherein the image acquisition step comprises capturing reflected lights from at least two reflectors of the calibration target with the camera.

17. The camera calibration method according to claim 15, wherein the pattern information includes information on arrangement of the reflector and an interval of the reflector.

18. The camera calibration method according to any one of claims 15 to 17, wherein
the reflector includes a plurality of reflectors, and
each of the reflectors has a spherical shape and are arranged in an array on the calibration target.

19. The camera calibration method according to claim 18, wherein a surface of each reflector is a mirrored surface or a rough surface from which a specularly reflected light distinguishable from a diffusely reflected light produced by illumination light incident on the surface of the reflector at a non-normal angle is obtained.

20. The camera calibration method according to claim 18, wherein the reflector is made of glass or sapphire.
